# EUROPÄISCHE PATENTSCHRIFT

(11) **EP 0 528 233 B1**
(45) Veröffentlichungstag und Bekanntmachung des Hinweises auf die Patenterteilung: **07.05.1997**
(21) Anmeldenummer: 92113072.0
(22) Anmeldetag: 31.07.1992
(51) Int. Cl.: F16L 19/06, H02G 3/06, H01B 17/58

(54) **Klemmverschraubung mit Schraubhülse, Gegenhülse und Klemmeinsatz**
Threaded clamp provided with a threaded sleeve, a counter-sleeve and clamping means
Collier de serrage fileté comportant un manchon fileté, un contre-manchon et des moyens de serrage

(30) Priorität: 16.08.1991 DE 4127162
(43) Veröffentlichungstag der Anmeldung: 24.02.1993
(73) Patentinhaber: Anton Hummel Verwaltungs-GmbH, D-79183 Waldkirch (DE)
(72) Erfinder: Gehring, Peter, W-7809 Simonswald-Griesbach (DE)
(74) Vertreter: Patent- und Rechtsanwaltssozietät, Schmitt, Maucher & Börjes

(56) Entgegenhaltungen:
- EP-A- 0 203 269
- EP-A- 0 322 625
- DE-C- 3 903 354
- DE-C- 4 021 731
- GB-A- 2 013 420

## Beschreibung

Die Erfindung betrifft eine Klemmverschraubung mit einer Schraubhülse, einer damit verbindbaren Gegenhülse oder dergleichen Druckstück und mit einem damit gegen ein Kabel, Rohr, Schlauch, Stab oder einen ähnlichen zu klemmenden Körper preßbaren Klemmeinsatz, wobei die Gegenhülse oder dergleichen den Klemmeinsatz mit einer ringartigen Druckfläche zumindest an einer der Stirnseiten beaufschlagt oder übergreift und beim Anziehen des Gewindes mit einer sich verjüngenden Form, zum Beispiel mittels Rundung oder mittels eines Konus oder Stufen, welche am Klemmeinsatz, in der Schraubhülse oder anstelle der ringartigen Druckfläche in der Gegenhülse angeordnet sind, einen mit axialen, an der Stirnseite mündenden Schlitzen oder ähnlichen Freiräumen versehenen, Klemmfinger bildenden Bereich des Klemmeinsatzes radial gegen das Kabel, Rohr oder dergleichen hin verformt, wobei zwischen Klemmeinsatz und Kabel oder dergleichen eine Dichtung angeordnet ist, die von den durch die Schlitze oder ähnlichen Freiräumen an dem Klemmeinsatz gebildeten Klemmfingern durch deren radiale Verformung gegen das Kabel anpreßbar ist, wobei wenigstens ein Teil der Gesamtzahl der Klemmfinger zumindest zwei in axialer Richtung nebeneinander angeordnete Bereiche unterschiedlicher radialer Dicke hat und der dickere Bereich gegenüber dem dünneren Bereich der Klemmfinger nach innen übersteht und wobei die radiale Dicke des dickeren Bereiches des Klemmfingers wenigstens etwa zwei Drittel des Maßes beträgt, welches sich zwischen dem Kerndurchmesser des Gewindes der Schraubhülse und dem gleichen Gewinde der Gegenhülse bzw. Überwurfmutter und der stirnseitigen Durchgangsöffnung für den zu klemmenden Körper durch die Schraubhülse und die Gegenhülse, das heißt dem größten Klemmdurchmesser, erstreckt.

Eine derartige Klemmverschraubung ist aus der GB-A-2 013 420 bereits bekannt. In üblicher Weise ist dabei für ein Nennmaß der Schraubhülse und der damit verbindbaren Gegenhülse ein Durchmesserbereich für damit zu erfassende Körper vorgesehen, das heißt ein und dieselbe Größe der Klemmverschraubung kann für größere und kleinere Klemmdurchmesser eingesetzt werden. Dabei können vor allem bei Verschraubungen aus Kunststoff Schwierigkeiten hinsichtlich der zu erreichenden Zugentlastung auftreten insbesondere dann, wenn je nach Einsatzbedingungen auch eine entsprechend gute Dichtigkeit gefordert ist. Ungünstig ist bei dieser vorbekannten Klemmverschraubung, daß eine Dichtung in dem dünneren Bereich der Klemmfinger angeordnet und von dem dickeren Bereich der Klemmfinger übergriffen ist, so daß einerseits die Verformung der dünneren Bereiche der Klemmfinger beim Verklemmen durch die Dichtung behindert und im übrigen die axiale Ausdehnung der Dichtung durch die dickeren Bereiche der Klemmfinger beschränkt ist.

Da die äußeren Abmessungen von solchen Klemmverschraubungen durch vorgeschriebene Größen festgelegt sind, kann nur noch über die Abmessung der Klemmfinger, der Dichtung, sowie deren Formgebung die Zugentlastung und Dichtigkeit einer solchen Kabelverschraubung beeinflußt werden. Zu berücksichtigen ist dabei gleichzeitig, daß das Maß der Verjüngung der Überwurfmutter oder Gegenhülse eine wichtige Rolle bezüglich des jeweils notwendigen Drehmomentes zur Erreichung einer guten Zugentlastung und Dichtigkeit spielt. Gleichzeitig beeinflußt dieses Maß aber auch die Baulänge der Verschraubung. Je größer oder stumpfer der Winkel der Konusfläche an der Gegenhülse gegenüber der Mittelachse ist, um so kürzer kann zwar die axiale Erstreckung sein, ein um so größeres Drehmoment ist jedoch beim Anziehen der Verschraubung erforderlich.

Bei einer weiteren bekannten Klemmverschraubung abgewandelter Gattung gemäß DE-U-84 15 525.6 und den auf dem Markt erhältlichen Kabelverschraubungen sind die Klemmeinsätze beziehungsweise die Klemmfinger bezüglich ihrer Abmessungen, insbesondere ihrer radialen Abmessungen, so dimensioniert, daß zwischen ihnen und dem Kabel eine Dichtung mit einer reichlichen Wanddicke Platz findet, das heißt, die Klemmfinger haben auf ihre ganze oder nahezu ganze Länge eine relativ geringe radiale Abmessung, um genügend Platz für die Dichtung zu behalten. Dies führt zu dem scheinbaren Vorteil, daß das Drehmoment beim Anziehen einer Überwurfmutter und Verformen der Klemmfinger in radialer Richtung relativ niedrig gehalten werden kann, da die elastische dicke Wandung der Dichtung und die relativ dünnen Klemmfinger sich leicht verformen lassen und deshalb auch keine große Zugentlastung entstehen kann. Dieser Effekt wird bei der Kabelverschraubung gemäß DE-U-84 15 525.6 noch verstärkt, weil die bereits relativ dünnwandingen Klemmfinger an ihrem schraubhülsenseitigen Ende über eine zusätzliche, radial nach außen offene Materialschwächung schwenkbar sind, so daß der Klemmfinger über praktisch seine gesamte Länge um diese Schwächungsstelle radial nach innen verschwenkbar oder knickbar ist, bis sein entgegengesetztes freies Ende über die Dichtungswandung auf die Kabeloberfläche Klemmdruck ausübt.

Das weitere Verformen der Klemmfinger erfordert dann allerdings eine etwa ebenso hohe Krafteinwirkung beziehungsweise ein etwa ebenso großes Drehmoment wie die Verformung von nicht über Schwächungsstellen befestigten Klemmfingern.

Bei der Anordnung gemäß DE-U-84 15 525.6 könnte der von der radial nach außen offenen Materialschwächung ausgehende Teil der Klemmfinger auch als dickerer Bereich der Klemmfinger gegenüber der Materialschwächung angesehen werden, wobei dann dieser dickere Bereich aber gegenüber dem dünneren Bereich der Materialschwächung radial nach außen übersteht, sich also auf der von dem zu klemmenden Körper abgewandten Seite befindet.

Es wurden verschiedene Bemühungen bekannt, die Klemmkraft und damit die Zugentlastung über unterschiedliche Gestaltungen der Klemmfinger und der zwischen ihnen befindlichen Schlitze zu verbessern. Dies ist jedoch insbesondere im Zusammenhang mit den jeweils kleineren Kabeldurchmessern einer Kabelverschraubung zum Teil daran gescheitert, daß die Klemmfinger in Klemmstellung bei den kleineren Kabeldurchmessern zum Teil zu lang sind und dadurch bereits vor Beendigung des Klemmvorganges aus der Durchgangsbohrung der Gegenhülse hervortreten, wodurch eine weitere Steigerung der Kabelpressung nicht mehr möglich ist, da die zu schwachen Klemmfinger mit zunehmendem Hineinragen in die Durchgangsbohrung der Gegenhülse wegen der nun fehlenden Abstützfläche auch zunehmend durch das gepreßte Kabel nach außen aufgebogen werden, wodurch der Anpreßdruck bzw. die dadurch bewirkte Zugentlastung verringert wird. Ein weiteres Beispiel eines Schwachpunktes ist die zu große Wandstärke des Dichtungseinsatzes wodurch die Wandstärke bzw. radiale Dicke der Klemmfinger zwangsläufig auf einen sehr engen Bereich begrenzt wird. Zwar hat eine reichliche Wandstärke der Dichtung Vorteile, jedoch zehrt sie vor allem bei den kleineren Kabelabmessungen zu viel Verformungsweg auf, bevor es zu einer stärkeren Klemmung kommt, die dann auch noch durch die relativ dicke Dichtung abgepolstert wird. Außerdem führt eine dicke Dichtungswandung zwangsläufig über eine schwächere Klemmfingerwandung zu einem kleineren Anpreßdruck auf die Kabeloberfläche.

Darüber hinaus erzeugt die Einschnürung der Dichtung einen Werkstoffstau, der zumindest bei Verwendung als Kabelverschraubung für die kleineren Kabeldurchmesser zu einer erheblichen Reaktionskraft in der Gegenhülse oder Überwurfmutter führt. Diese muß nämlich wegen der Weichheit der Dichtung zum Erzielen einer genügend großen Klemmkraft oder Zugentlastung derart stark angezogen werden, daß es zum Aufsprengen oder Brechen der Wandung insbesondere innerhalb des Gewindebereiches kommen kann. Eine solche Überlastung der Gewindeverbindung zwischen Gegenhülse und Schraubhülse kann dazu führen, daß Gewindegänge überspringen, also ein stärkeres Anziehen der Verschraubung nicht mehr zur Verstärkung der Zugentlastung führt.

Die bisher bekannten Kabelverschraubungen können also nicht gleichzeitig für eine kurze Baulänge bei dennoch ausreichender Zugentlastung auch für die jeweils kleineren Kabelabmessungen vorgesehen werden, ohne daß es zur Gefahr einer Überbeanspruchung der Gegenhülse oder Überwurfmutter kommt und ohne daß die Anzugsdrehmomente zu hoch werden.

Der Erfindung liegt die Aufgabe zugrunde, eine Klemmverschraubung der eingangs erwähnten Art zu schaffen, die bei kurzer Baulänge insbesondere auch für kleinere Klemmdurchmesser die gewünschte hohe Zugentlastung ermöglicht, ohne daß die Gegenhülse oder Überwurfmutter zu stark geschwächt wird. Dabei soll das Drehmoment zum Anziehen der Verschraubung dennoch möglichst niedrig gehalten und gleichzeitig eine gute Abdichtung der Klemmverschraubung ermöglicht werden können.

Zur Lösung dieser Aufgabe ist die Klemmverschraubung der eingangs erwähnten Art dadurch gekennzeichnet, daß die radiale Dicke des dickeren Bereiches so gewählt ist, daß zwischen der Klemmfläche des dickeren Bereiches in dessen Ausgangsstellung und dem größten Klemmdurchmesser ein radialer Abstand vorhanden ist, und daß dieser Abstand wenigstens teilweise von der Dichtung ausgefüllt ist.

Durch diese Gestaltung der Klemmfinger ergeben sich für die deutlich gegeneinander in ihrer Dicke unterschiedlichen Abschnitte oder Bereich unterschiedliche Funktionen. Die erfindungsgemäßen Klemmfinger sind nämlich gleichzeitig - an den erforderlichen Stellen - weich und elastisch und auch hart, unelastisch und unnachgiebig. Die sich widersprechenden Eigenschaften für eine einerseits leichtgängige Verformung und andererseits gute Überbrückung und starke Zugentlastung sind jeweils abschnittsweise in den Bereichen der Klemmfinger vorhanden, wo sie benötigt werden. Die radial dickeren Bereiche gehen von den freien Enden aus, die bei der Verschraubung die Klemmkraft und Zugentlastung erzeugen müssen. Aufgrund ihrer radialen Dicke genügt eine weniger große Verschwenkung der Klemmfinger, um in eine starke Klemmstellung zu gelangen.

Gleichzeitig wird die Verformung der Klemmfinger in ihre Klemmstellung durch die sich anschließenden dünneren Bereiche begünstigt, die aufgrund ihrer geringeren radialen Abmessung weich und nachgiebig sind und somit ein entsprechend vermindertes Drehmoment gegenüber einer Lösung ausreichen lassen, bei welcher die Klemmfinger über die gesamte Länge die für ein Erfassen auch kleinerer Kabel erforderliche Dicke haben. Gleichzeitig wird erreicht, daß die Dichtung eine entsprechend verminderte Dicke hat, so daß die Klemmkraft bei guter Abdichtung der Klemmverschraubung dennoch an dem Rohr, Kabel oder dergleichen auch mit einem kleineren Durchmesser ausreichend wirksam wird.

Da der zwischen der Klemmfläche des dickeren Bereiches des Klemmfingers und dem größten Kerndurchmesser in Ausgangsstellung freibleibende Abstand ein relativ geringes Maß hat, beeinträchtigt die diesen Abstand wenigstens teilweise ausfüllende Dichtung die Verklemmung praktisch nicht, ermöglicht aber die gewünschte gute Abdichtung der gesamten Klemmverschraubung. Dabei wird in vorteilhafter Weise durch die Verklemmung auch die Dichtung selbst erfaßt und festgelegt und schon der Klemmbereich bestmöglich abgedichtet.

Eine Steigerung der Wirksamkeit der Klemmkraft kann dadurch erreicht werden, daß die radiale Dicke des dickeren Bereiches des Klemmfingers drei Viertel von dem Maß beträgt, welches sich zwischen dem Kerndurchmesser des Gewindes an der Schraubhülse bzw. der Gegenhülse und der Durchgangsöffnung durch die Schraub- und Gegenhülse, das heißt, dem größten Klemmdurchmesser erstreckt. Die Dichtung kann also gegenüber der Gesamtabmessung dieses vorerwähnten Maßes einen noch geringeren Anteil einnehmen , so daß um so weniger Klemmkraft für die Verformung von Dichtungswerkstoff verlorengeht, also zur Verbesserung der Zugentlastung zur Verfügung steht.

Die Unterteilung der Klemmfinger in zwei Abschnitte unterschiedlicher Dicke erlaubt nun wahlweise die Verstärkung der Klemmfinger auf einen längeren Abschnitt in der Weise, daß sie sich in diesem Bereich nicht mehr biegen lassen, oder man hält diesen verstärkten vorderen Abschnitt so kurz, also den weicheren und elastischen Abschnitt im sich axial anschließenden Bereich des Fingers so lang, daß der verstärkte Fingerabschnitt ganz oder teilweise in die Einführöffnung der Gegenhülse oder Überwurfmutter hineinragen und sich ganz oder teilweise an der Innenwandung dieser Durchgangsöffnung anlegen kann, so daß ein Aufweiten der Klemmfinger unter Zugbelastung durch den festgeklemmten Körper praktisch ausgeschlossen wird. In beiden Fällen ist möglichst eine große Verstärkung der Dicke des vorderen Klemmfingerbereiches, also der Druck- oder Klemmzone, anzustreben. Gleichzeitig erfolgt in dem weicheren, elastischeren, schraubhülsenseitigen Bereich das Gegenteil, nämlich eine Verminderung des radialen und gegebenenfalls auch des in Umfangsrichtung sich erstreckenden Querschnittes, so daß insgesamt Klemmfinger entstehen, die einerseits mit relativ geringem Drehmoment radial nach innen verformt werden können, andererseits gleichzeitig vor allem auch bei kleineren Klemmdurchmessern eine hohe Klemmkraft bewirken, ohne daß das begrenzte Maß zwischen Gegenhülse oder Überwurfmutter und zu klemmenden Körper durch eine Schwächung der Überwurfmutter vergrößert werden muß. Dabei macht sich die Erfindung die Erkenntnis zunutze, daß für die jeweils größeren Klemmdurchmesser einer Klemmverschraubung bestimmter Abmessung eine Verstärkung oder Vergrößerung der Klemmkraft über die bisherigen Werte hinaus nicht erforderlich ist, so daß die jeweils größeren Klemmdurchmesser ebenfalls mit Hilfe der Abschnitte unterschiedlicher radialer Stärke aufweisenden Klemmfinger ausreichend fest geklemmt werden können.

Eine besonders zweckmäßige Ausführungsform der Erfindung kann darin bestehen, daß der radial dickere Bereich gegenüber dem radial dünneren Bereich gleichzeitig radial nach innen und nach außen übersteht und daß der radial dickere Bereich in axialer Richtung insbesondere bis nahezu zum Ende der die Klemmfinger begrenzenden Schlitze oder ähnlichen Freiräumen reicht oder kürzer ist.

Bei dieser Lösung, bei welcher der dickere Bereich gegenüber dem dünneren Bereich radial sowohl nach innen als auch nach außen übersteht, also der dünnere Bereich radial etwas nach innen versetzt ist, kann eine bessere Anpassung der Verformbarkeit dieses dünneren Bereiches insbesondere dann ermöglichen, wenn der dünnere Bereich eine größere Länge hat.

Die Länge des dickeren Bereiches kann sich nahezu bis zum Schlitzende der Klemmfinger erstrecken, oder weniger, z.B. etwa zwei Drittel, die Hälfte oder ein Drittel der Gesamtlänge der Klemmfinger betragen.

Je nachdem, ob der dickere Bereich gegenüber dem dünneren Bereich radial nach innen oder zusätzlich nach außen übersteht, kann der gerade, rechtwinklige, schräge oder gekrümmt abgesetzte Übergang vom radial dickeren Bereich des Klemmfingers zu dem radial dünneren Bereich von innen nach außen und/oder von außen nach innen verlaufen.

Die Relation der Länge des dickeren Bereiches zur Länge des dünneren Bereiches kann so gewählt sein, daß der dicke Bereich in der größtmöglichen Klemmstellung oder Verformung - also an einem kleineren oder kleinsten Klemmdurchmesser der jeweiligen Klemmverschraubung - mit seiner Außenseite zumindest noch teilweise an der Druckfläche der Gegenhülse oder Überwurfmutter anliegt. Dadurch wird die entsprechende Kraftübertragung der Klemmkraft über diesen dickeren Bereich sichergestellt.

Eine weitere Abwandlungsmöglichkeit kann vorsehen, daß die Länge des dünneren Bereiches etwa das Ein- bis Dreifache seiner Wandstärke beträgt. In diesem Falle ist also die Länge des dünneren Bereiches sehr gering und der dicke Bereich nimmt von der Gesamtlänge des Klemmfingers einen sehr großen Anteil ein, kann also entsprechend gut radial einwärts um den dünnen Wandbereich geschwenkt und auch an ein dünneres Rohr, Kabel oder dergleichen angedrückt werden. Dies ist vor allem dann günstig, wenn die axiale Abstützung der Dichtung gegenüber den Schlitzenden und den Enden der Klemmfinger in axialer Richtung zurückversetzt ist.

Die axiale Gesamtlänge der Klemmfinger kann in Klemmstellung etwa dem Überstand der Gegenhülse über die Schraubhülse in gegenseitiger verschraubter Position und Klemmstellung entsprechen und die Klemmfinger können in Klemmstellung mit einem Teil ihrer radialen Verdickung in die Durchgangsöffnung der Gegenhülse am radialen inneren Ende der ringartigen Fläche der Gegenhülse hineinragen. Dabei kann sich der radial verdickte Bereich der Klemmfinger, von ihrem freien Ende ausgehend, mindestens bis in den Bereich der ringförmigen Druckfläche der Gegenhülse bzw. Überwurfmutter erstrecken, in diesen hineinreichen bzw. sich bis zu dessen Ende am größten Durchmesser erstrecken.Dies führt zu dem schon erwähnten Effekt, daß es bei einer Zugbelastung nicht zu einer Aufweitung der radial verstärkten Klemmfinger kommen kann.

Eine sich an unterschiedliche Klemmdurchmesser bei ein und derselben Klemmverschraubung besonders gut anpaßbare Form der Klemmfinger, die vor allem zum Beispiel bei einer Kabelklemmung auch den kleineren Kabeldurchmesser gut und sicher mit ausreichender Klemmkraft erfassen können, ergibt sich, wenn die Länge des dünneren Bereiches des Klemmfingers so groß und seine radiale Dicke derart gering sind, daß der Klemmfinger in seiner verformten Endstellung zwischen der Wandung der Durchgangsöffnung und der Außenseite eines einen radialen Abstand zu dem Klemmeinsatz und der Durchgangsöffnung der Schraubhülse bzw. der Gegenhülse aufweisenden kleineren Kabels vom Ende der Schlitze ausgehend zunächst schräg radial nach innen bis zu einem Wendepunkt gebogen und von diesem Wendepunkt zu dem die Verdickung aufweisenden freien Halteende des Klemmfingers hin eine von der ersten Biegung abweichende zweite Biegung oder Gegenbiegung hat.

Ein derartiger Klemmfinger läßt sich also nicht einfach nur radial nach innen verschwenken, sondern dabei in seinem dünneren Bereich so verformen, daß er sich weitestgehend an die Verhältnisse anpaßt, die sich beim Festlegen eines dünneren Kabels ergeben, wobei in vorteilhafter Weise die radial innenliegende Klemmfläche des dickeren Bereiches gut wirksam werden kann, weil der dünnere Bereich neben der Verformung des dickeren Bereiches in radialer Richtung nach innen auch eine Gegenverformung zur Anpassung der Klemmfläche an die Kabeloberfläche erlaubt.

In besonders zweckmäßiger Weise kann der verformbare Klemmfinger in seinem dünnen weichen Bereich etwa S-förmig verformbar sein.

Diese Merkmale und Maßnahmen tragen alle nicht nur dazu bei, eine hohe Klemmkraft auch bei kleineren und kleinsten Klemmdurchmessern einer Nenn-Abmessung einer Klemmverschraubung zu erreichen, sondern die Gesamtlänge der Klemmverschraubung geringzuhalten. Auch bei ausreichender Klemmfingerlänge wird die Klemmverschraubung in ihrer Gesamtabmessung durch die Gegenhülse oder Überwurfmutter nicht länger, weil sie die Klemmfinger in ihre Durchgangsöffnung aufnehmen kann.

Dabei kann die axiale Gesamtlänge der Klemmfinger so gewählt sein, daß sie in Klemmstellung an einem kleineren Klemmdurchmesser mit ihrer radial verdickten Klemm- bzw. Druckzone in der Durchgangsöffnung der Gegenhülse angeordnet sind. Gegenüber den radial unverstärkten schräg nach innen verschwenkten Klemmfingern ergibt sich so eine erhebliche Steigerung der Zugentlastung vor allem im Bereich der jeweils kleineren Klemmdurchmesser einer Klemmverschraubung.

Im Zusammenhang mit der vorerwähnten Ausgestaltung ist es vorteilhaft, wenn sich der radial dünnere Bereich der Klemmfinger in maximaler Klemmstellung nahezu bis an den kleineren Durchmesser der sich verjüngenden Form oder Druckfläche in der Schraubhülse oder in der Gegenhülse oder darüber hinaus erstreckt und der dickere Bereich ganz oder teilweise in die Durchgangsöffnung der Gegenhülse oder der Schraubhülse hineinragt.

Eine noch bessere Nachgiebigkeit der Klemmfinger in ihrem radial dünneren Bereich und somit eine noch bessere Anpassung einer Klemmverschraubung an unterschiedliche Abmessungen von zu klemmenden Körpern ergeben sich, wenn die Klemmfinger durch ein- oder beidseitige Einbuchtungen mindestens in ihrem dünneren unteren Bereich in ihrer Umfangserstreckung schmaler als in ihrem oberen bzw. vorderen, verdickten Bereich sind.

Wenigstens drei Klemmfinger können am Umfang des Klemmeinsatzes verteilt sein.

Eine weitere, die Anpaßbarkeit ausgestaltende Möglichkeit besteht bei einer erfindungsgemäßen Klemmverschraubung darin, daß die Klemmfinger bei vorzugsweise gleicher Gesamtlänge am Umfang des Klemmeinsatzes verteilt verschieden lange dickere Bereich haben, so daß ein Klemmfinger in Klemmstellung bei kleineren Kabeldurchmessern schräg und der andere Klemmfinger etwa S-förmig und mit seinem verdickten Bereich in der Durchgangsöffnung ganz oder teilweise anliegend angeordnet sind.

Um eine möglichst einfach zu montierende Kunststoff-Klemmverschraubung zu erhalten, ist es günstig, wenn der Klemmeinsatz, in diesem Fall ebenfalls aus Kunststoff, einstückig an die Schraubhülse angeformt ist.

Die Schlitze und/oder die seitlichen Einbuchtungen oder ähnliche Freiräume der Klemmfinger können in die radial äußere Wandung der Ringnut hineinreichen und sich gegebenenfalls - in ihrer größten axialen Ausführung - bis oder nahezu bis zum Nutengrund erstrecken. Um eine gute Dichtigkeit zu haben, können die Zwischenräume im unteren Bereich der Klemmfinger - also am Schlitzanfang - durch eine elastische, beim Klemmvorgang stauch- und/oder faltbare oder durch Scherwirkung sich einseitig selbst freischneidende dünne Spritzhaut nach außen verschlossen sein.

Auch eine Anpassung an das Gewinde ist möglich, indem der Nutengrund bzw. die Abstützfläche für die Dichtung sich in axialer Richtung auf gleicher Höhe mit dem Gewindeanfang des Außengewindes der Schraubhülse befindet. Wenn sich dabei gleichzeitig, wie vorstehend erwähnt, die Schlitze bis oder bis nahezu zum Nutengrund erstrecken, kann mit der angezogenen Überwurfmutter über den Auslauf des Gewindes noch eine zusätzliche Klemmkraft auch auf den entsprechenden Anfang der Klemmfinger ausgeübt werden.

Eine weitere Ausgestaltung kann vorsehen, daß sich die radial innenliegende, dem zu klemmenden Körper in Gebrauchsstellung zugewandte Seite der Klemmfinger in die radial außenliegende Wandung der Ringnut fortsetzen kann. Somit ergibt sich auch an dieser Außenwandung der Ringnut eine relativ dünne Wandstärke entsprechend dem dünneren Klemmfingerbereich.

Damit sich die Klemmfinger in Gebrauchsstellung innerhalb der Durchgangsöffnung der Gegenhülse anlegen können und abstützen lassen, ist es vorteilhaft, wenn in der Durchgangsöffnung der Gegenhülse eine ringförmig umlaufende Anlagefläche für die der Klemmstelle abgewandte Seite des verdickten Klemmstückes zur Abstützung des Klemmfingers, insbesondere eine etwa zylindrische und/oder sich nach außen verjüngende kegelstumpfförmige Fläche vorgesehen ist. Selbst bei größeren Zugkräften und einer entsprechend großen Druckkraft zwischen den Außenseiten der Klemmfinger und der Durchgangsöffnung verteilt sich dann diese Kraft über eine genügend große Fläche bzw. wird umgekehrt eine sichere Halterung der Klemmzonen in der einmal eingestellten Position bewirkt.

Die Erfindung erlaubt eine weitere vorteilhafte Ausgestaltung in der Weise, daß die sich verjüngende Druckfläche der Gegenhülse in Klemmstellung der Klemmfinger an einem kleinerem Durchmesser zumindest mit ihrem größten Durchmesserbereich sich nahe am Schlitzende der Klemmfinger befindet, oder auf den der Schraubhülse nahen Bereichen der Klemmfinger aufsitzt. Da diese der Schraubhülse nahen Bereiche der Klemmfinger aufgrund ihrer Weichheit sehr anpassungsfähig und verformbar sind, können sie sich bei entsprechender Abmessung der Gegenhülse oder Überwurfmutter an deren Druckfläche anlegen, werden also praktisch über ihren gesamten Verlauf und insbesondere auch in ihrem schraubhülsennahen Bereich radial nach außen abgestützt, was die Übertragbarkeit von Kräften bei einer Zugbelastung weiter verbessert.

Eine besonders vorteilhafte Ausgestaltung der Erfindung ist dadurch gekennzeichnet, daß die sich verjüngende Druckfläche der Schraubhülse oder der Gegenhülse oder Überwurfmutter im Querschnitt gesehen vom größeren Durchmesser ausgehend unter einem kleinen Winkel relativ zum Radius oder Querschnitt etwa geradlinig nach innen verläuft und in ihrem weiteren Verlauf eine Richtungsänderung in dem Sinne aufweist, daß ihr weiterer Verlauf zur Innenseite oder Achse hin gegenüber dem Radius einen größeren Winkel hat.

Dadurch wird nämlich erreicht, daß während der ersten Drehbewegungen der Gegenhülse oder Überwurfmutter eine relativ kleine axiale Verstellung schon eine relativ große Verformung der Klemmfinger in radialer Richtung nach innen bewirkt, was mit einem relativ geringen Drehmoment möglich ist, weil zunächst einmal insbesondere beim Festklemmen eines Körpers mit kleinerem Durchmesser die Finger noch nicht der durch das Verklemmen bewirkten Gegenkraft ausgesetzt sind.

Haben dann jedoch die Klemmstellen der Klemmfinger Kontakt mit der Körperoberfläche - sei es direkt, sei es indirekt über die zwischenliegende Dichtung - wird die erforderliche Anzugskraft und das Drehmoment schlagartig größer. Wenn nun durch die Richtungsänderung der Konusfläche der Winkel entsprechend größer wird, ergibt sich zwar für diesen letzten Bereich eine Verringerung der Radialverstellung der Klemmfinger je Umdrehung, gleichzeitig aber auch die für diesen Belastungsfall wünschenswerte Verringerung des erforderlichen Drehmomentes unter Beibehaltung einer großen Klemmkraft. Somit ergibt sich eine gleichzeitige Erfüllung der an sich gegensätzlichen Forderung, die Baulänge und die erforderliche Axialverstellung der Gegenhülse möglichst geringzuhalten, aber das für eine große Klemmkraft erforderliche Anzugs-Drehmoment ebenfalls kleinzuhalten. Erreicht wird dies dadurch, daß die Verminderung des Drehmomentes durch einen größeren Winkel an der Konusfläche erst dann eingesetzt, wenn die Verklemmung gegenüber dem zu klemmenden Körper beginnt, oder nach einer ersten Verklemmung immer stärker wird, denn die erste Verformung zum Beispiels eines Kabels bei Berührung mit den Klemmfingern erfordert zunächst auch noch eine relativ geringe Kraft.

Zur Anpassung an die an einer Klemmverschraubung vorgesehenen verschiedenen Klemmdurchmesser ist es zweckmäßig, wenn wenigstens ein Drittel der radialen Erstreckung der sich verjüngenden Druckfläche unter dem kleineren Winkel und der Rest unter dem größeren Winkel verlaufen.

Noch kürzer kann die Baulänge werden, wenn wenigstens zwei Drittel der radialen Erstreckung der ringartigen Druckfläche unter dem kleineren Winkel und der Rest unter dem größeren Winkel verlaufen. Vor allem der letzte Teil der Klemmbewegung erfolgt dann über diesen größeren Winkel mit dem erwünschten verminderten Drehmoment.

Die Richtungsänderung von dem spitzeren oder kleineren Winkel zu dem größeren Winkel hin kann dabei winkelförmig, bogenförmig oder gerundet, vorzugsweise ballig und insbesondere konvex sein. Je nach Krümmungsradius des Bogens oder der Rundung läßt sich so die Anpassung des Drehmomentes an die Zunahme der Klemmkraft gestalten und ein weitgehend stetiger Übergang von einer schnellen Verformungsbewegung zu einer langsamer werdenden Verformung jedoch mit vermindertem Drehmoment erzielen.

In vorteilhafter Weise kann die Klemmverschraubung zur Erreichung bestmöglicher Zugentlastungswerte auch bei Verwendung kleinerer Klemmdurchmesser mit Klemmfingern mit unterschiedlichen Querschnittsdicken der Klemmfinger dahingehend ausgestaltet sein, daß die sich verjüngende Druckfläche der Gegenhülse zum radialen Verformen der Klemmfinger aus wenigstens zwei konischen Druckflächen mit verschieden steilen Winkeln relativ zu einer Durchmesserebene besteht, wobei die innere, in die Durchgangsöffnung der Schraubhülse oder der Gegenhülse mündende Druckfläche den größeren Winkel aufweist.

Dadurch ist es möglich, daß die dickeren Bereiche der Klemmfinger in maximaler Klemmstellung die sich verjüngende Druckfläche in der Schraubhülse bzw. Gegenhülse im Bereich des größten Winkels sich abstützend beaufschlagen. Somit ist wiederum für eine günstige Position der dickeren Bereiche der Klemmfinger mit einer bestmöglichen Klemmkraftübertragung gesorgt.

Damit durch die Klemmbewegung die Dichtung nicht nach innen gefaltet oder gar eingerollt wird und eine solche Verformung verhindert wird, kann der Dichtungsrand von der sich verjüngenden Druckfläche an die Stirnseite der Klemmfinger andrückbar und festklemmbar sein.

Im radial dünneren Bereich der Klemmfinger kann die in dem Klemmeinsatz und dessen Haltehülse eingesetzte Dichtung zumindest bis unter die Klemmstellen der verdickten Bereiche der Klemmfinger von ihrem Außendurchmesser ausgehend in radialer Erstreckung einen Abstand zum Innendurchmesser der radial dünneren Bereiche der Klemmfinger aufweisen. Es ist also nicht erforderlich, daß der gesamte Zwischenraum zwischen den radial dünneren Bereichen der Klemmfinger und dem zu klemmenden Körper von Dichtungsmasse ausgefüllt ist, wenn die Dichtung, im Nutgrund aufsitzend, unter die Klemmstellen reicht und dort bei der Verschraubung zusammen mit dem Kabel genügend zusammengedrückt wird.

Es ist aber auch möglich, daß die Dichtung einen Absatz hat und ihr im Querschnitt dickerer Bereich innerhalb der dünnen Bereiche der Klemmfinger und ihr im Querschnitt dünner Bereich zumindest teilweise innerhalb der verdickten Bereiche der Klemmfinger angeordnet ist, so daß auch in axialer Erstreckung ein längerer Dichtbereich entsteht.

Dabei kann die Dichtung mit ihrem Absatz ganz durch den oder gegebenenfalls über den radial dickeren Bereich der Klemmfinger reichen. Dies ist auch dann zweckmäßig, wenn der über die Klemmfinger überstehende Bereich der Dichtung in noch zu beschreibender Weise fixiert oder in der schon erwähnten Weise mit Hilfe der sich verjüngenden Druckfläche beim Klemmvorgang zumindest anfänglich festgeklemmt wird.

Wird eine hülsenförmige Dichtung mit relativ geringer Wandstärke durch Klemmfinger allmählich radial nach innen verformt, und zwar nahe einem Stirn- oder Randbereich, kann diese Stirnseite bzw. der Randbereich nach innen einspringen und beim Auftreffen zum Beispiel auf ein Kabel dann eine Falte bilden. Es besteht daher durch die mit der radialen Verformung einhergehende Einschnürung und durch die zusätzliche axiale Beaufschlagung dieses Dichtungsbereiches die Gefahr einer Einstülpung des Randbereiches, also eines partiellen radial und axialen Ausweichens insbesondere dieses Dichtungsrandes.

Um dies zu verhindern und die erforderliche Dichtigkeit auch bei kleineren Klemmdurchmessern zu erreichen, ohne die Wandstärke der Dichtung zu groß machen zu müssen, kann nach einer Ausgestaltung der Erfindung von eigener schutzwürdiger Bedeutung vorgesehen sein, daß an der der Haltehülse im Inneren des Klemmeinsatzes abgewandten Stirnseite der Dichtung ein umlaufender Wulst oder dergleichen Verstärkung vorgesehen ist, der die freien Enden der verdickten Bereiche der Klemmfinger oder dort angeordnete Aussparungen stirnseitig übergreift oder in an den Klemmflächen eingesenkte Ausnehmungen eingreift. Es wird also der möglichen Verformung und Einstülpung der Dichtung durch eine entsprechende Materialverstärkung in Form eines umlaufenden Wulstes entgegengewirkt, so daß die im übrigen relativ dünnwandige Dichtung zunächst ohne die Gegenlagerung gegen die Oberfläche des zu klemmenden Körpers nach innen eingeschnürt werden kann und in der gewünschten Weise auf diese Oberfläche auftrifft, um dann unter der weiteren Verformung der Klemmfinger entsprechend angedrückt zu werden. Der Wulst oder die Verstärkung sorgt dabei dafür, daß auch unter den dabei auftretenden Belastungen und Stauchungen die Dichtung eine Form bekommt oder behält, die in Klemmstellung die gewünschte Abdichtung bewirkt.

Eine zusätzliche oder alternative Ausgestaltung insbesondere bezüglich der Dichtung von vorteilhafter Bedeutung kann darin bestehen, daß die Dichtung zumindest im Klemmbereich der Klemmfinger an ihrem inneren und/oder äußeren Umfang umlaufende und/oder axial oder schräg verlaufende Aussparungen, Ausnehmungen, Rillen, Rinnen, Nuten oder dergleichen Material- oder Wandungsschwächungen aufweist, die beim Verformen der Klemmfinger und dem daraus resultierenden, im Umfang wirksamen Stauchen der Dichtung zusammenpreßbar sind.

Statt daß also die Dichtung im Bereich der Klemmfinger beim allmählichen Einschnüren und vor ihrem Auftreffen auf ein sie abstützendes Kabel selbst eingerollt oder eingefaltet wird, werden die entsprechenden Verformungen gezielt an Rillen, Rinnen und dergleichen vorgesehen und vorgenommen, so daß die Dichtung problemlos um einen genügend großen Betrag gestaucht werden kann, um auch gegenüber kleineren Klemmdurchmessern gut wirksam zu werden.

Versuche haben gezeigt, daß die Dichtung auch wenigstens einen durch Schlitze oder Nuten in Segmente aufgeteilten ringförmigen Wulst insbesondere an ihrer dem Klemmeinsatz abgewandten äußeren Stirnseite haben kann. Der Wulst führt einerseits zu einer genügenden Verstärkung zum Verhindern eines Einrollens des Dichtungsrandes während der Stauchung, während gleichzeitig die Nuten oder Rillen in diesem Wulst seine eigene Stauchung begünstigen. Die einzelnen Segmente können sich dabei gegeneinander abstützen, sowie sie durch die Stauchung im Bereich der Rillen oder Rinnen aneinanderstoßen.

Eine weitere Möglichkeit, die Dichtung gegen ungewollte Verformungen zu wappnen, wenn sie über einen größeren Bereich eingeschnürt werden soll, kann darin bestehen, daß die Dichtung an ihrem inneren und/oder äußeren Umfang Erhebungen, Stege, Wülste oder dergleichen Verstärkungen aufweist, welche die Dichtung bei starker Einschnürung durch den Klemmeinsatz stabilisieren, und daß die Erhebungen an der äußeren Fläche der Dichtung gegebenenfalls in entsprechende Vertiefungen der Klemmfinger eingreifen. Vor allem dieses gegebenenfalls zusätzlich vorgesehene letzte Merkmal führt dann auch zu einem Formschluß zwischen Dichtung und Klemmeinsatz in axialer Richtung, so daß während des Verformungsvorganges eines zusätzliche Halterung der Dichtung erreicht wird.

Die Erfindung erlaubt noch eine weitere Ausgestaltung, die eine ganz erhebliche vorteilhafte Bedeutung hat, dahingehend, daß die jeweiligen Klemmstellen der Klemmfinger bei praktisch allen Klemmdurchmessern einer Klemmverschraubung in jeweils übereinstimmender oder nahezu übereinstimmender Position an Kabel, Rohr-, Schlauch oder dergleichen Oberflächen angreifen und dabei möglichst parallel zu diesen Oberflächen orientiert bleiben. Diese Ausgestaltung sieht vor, daß die Klemmfinger an der ihrer Klemmstelle abgewandten Seite eine mit der sich verjüngenden Druckfläche der Gegenhülse oder Überwurfmutter oder der Schraubhülse in Wirkverbindung befindliche Führungsfläche haben, die bei der Verschraubung und der daraus resultierenden Verformung des Klemmfingers in Anlage mit der sich verjüngenden Druckfläche bleibt, und daß der diese Führungsfläche aufweisende, insbesondere verdickte Klemmbereich der Klemmfinger mit seiner Führungsfläche an der sich verjüngenden Druckfläche unter Verformung des dünnen Klemmfingerbereiches entlanggleitet.

Somit erhält der Klemmfingerbereich, der bei der Klemmung in Wirkverbindung zum Beispiel mit einem Kabel tritt, eine ganz bestimmte Lage relativ zum Kabel, während er nach innen verformt wird. Es erfolgt also nicht eine mehr oder weniger zufällige Verbiegung des Klemmfingers, je nachdem, welcher Teil seiner Außenseite von der Druckfläche gerade verformt oder beaufschlagt wird, sondern durch die an der Klemmfinger-Außenseite befindliche Führungsfläche und deren Zusammenwirken mit der Druckfläche ist für jeden Verformungszustand eine bestimmte Lage des Klemmbereiches vorgegeben, so daß der Klemmbereich je nach Kabeldicke in einer entsprechend vorbestimmten Lage an der Kabeloberfläche zu liegen kommt.

Eine zweckmäßige Ausgestaltung der Erfindung von eigener schutzwürdiger Bedeutung kann darin bestehen, daß an der Stirnseite oder Führungsfläche der Klemmfinger wenigstens eine Abstufung und ein in axialer Richtung wirksamer Anschlag gegenüber der Überwurfmutter vorgesehen sind, so daß der stirnseitige Übergang vom Innendurchmesser zum Außendurchmesser an dem jeweiligen Klemmfinger wenigstens einmal abgestuft ist. Sind dabei relativ kleine Abstufungen vorgesehen, die aber jeweils gleich groß sind, können die einzelnen Stufensprünge sehr gut an die Unterschiede der Abmessungen der zu einer Klemmverschraubung vorgesehenen einzelnen Klemmdurchmesser passen, gleichzeitig aber die Zentrierung und damit die Stabilisierung der Lage des Klemmbereiches verbessern. Ein weiterer Vorteil dieser Anordnung besteht darin , daß bei einer Auflagerung beispielsweise der Innenfläche der Durchgangsöffnung der Gegenhülse oder Überwurfmutter auf einem im wesentlichen zylindrischen Bereich der Abstufung die Gegenhülse oder Überwurfmutter zum Fixieren der Klemmung praktisch nur noch einer radialen Belastung unterliegt, während die von ihrer Konusfläche während des Klemmvorganges ausgehende axiale Belastung entfällt, da die Konusfläche zur radialen Verformung in dieser Halteposition außer Wirkung ist.

Besonders zweckmäßig ist es, wenn wenigstens zwei Abstufungen vorgesehen sind und die jeweils auf dem größten Durchmesser liegende Stirnseite der letzten Abstufung den axialen Anschlag bildet.

Für eine Festlegung der Klemmposition in unterschiedlichen Stufensprüngen ist es zweckmäßig, wenn die Überwurfmutter nahe der Durchgangsbohrung ihrerseits wenigstens eine oder mehrere Abstufungen aufweist, deren Höhe gleich oder kleiner als die der Abstufungen der Klemmfinger sein kann. Somit kann die Festlegung der jeweiligen Klemmposition auch für größere Klemmdurchmesser jeweils an einer im wesentlichen zylindrischen Fläche erfolgen, das heißt, die Klemmfinger müssen nicht so weit verformt werden, daß zumindest ihre radial am weitesten innenliegende Stufe in die Durchgangsbohrung gelangt.

Für eine Erleichterung bei der Durchführung der Klemmung und beim Überwinden der einzelnen Abstufungen ist es zweckmäßig, wenn die Übergänge von den Stirnseiten auf die äußeren Axialflächen der Abstufungen abgeschrägt oder abgerundet sind.

Zusätzlich ist es möglich, daß die jeweils im Querschnitt etwa axial verlaufenden Flächen der Abstufungen in axialer Richtung von der Stirnseite aus zur nächsten Stufe unter spitzem Winkel konisch ansteigen. Somit kann die Überwurfmutter in der jeweiligen Klemmstellung noch zusätzlich kraftschlüssig etwas fixiert werden.

Durch solche Abstufungen an den freien Enden der Klemmfinger und insbesondere auch an der inneren Konusfläche der Überwurfmutter ist es möglich, für jede Nennweite beziehungsweise jeden Nenn-Durchmesser des zu klemmenden Körpers eine Abstufung vorzusehen, also die Stufensprünge den Sprüngen der Abmessungen der Durchmesser anzupassen. In der dann jeweils beim Aufeinanderliegen zylindrischer Flächen dieser Abstufungen erreichten Klemmposition tritt in vorteilhafte Weise innerhalb der Überwurfmutter nur eine radiale Haltekraft auf, während die an mit einem Klemmkonus versehenen Überwurfmuttern gleichzeitig normalerweise auftretende axiale oder Zugbelastung , die zu Spannungs-Korrosionen beitragen oder führen kann, entfällt.

Statt eines einstückig angeformten Klemmeinsatzes läßt sich die Erfindung natürlich auch mit einem lose in die Kabelverschraubung eingesetzten Klemmeinsatz aus einem beliebigen Werkstoff realisieren. Dabei kann in bekannter Weise als Gegenhülse eine Überwurfmutter dienen, es ist aber auch möglich, daß die Gegenhülse ein Außengewinde und die Schraubhülse ein Innengewinde hat und der Klemmeinsatz zwischen diesen beiden Teilen eingesetzt ist, wobei wiederum die sich verjüngende Druckfläche an der Gegenhülse, aber auch an einem Absatz in der Schraubhülse vorgesehen sein kann. In letzterem Falle hat dann die Gegenhülse zweckmäßigerweise eine lediglich in einer Radialebene liegende Druckfläche, womit eine entsprechend gestaltete Stirnseite des Klemmeinsatzes beaufschlagt werden kann.

In all diesen Fällen läßt sich die Erfindung realisieren, also können Klemmfingerbereiche unterschiedlicher Dicke in axialer Richtung nebeneinander angeordnet sein und dabei die unterschiedlichen vorerwähnten Ausgestaltungen und Weiterbildungen aufweisen und in der beschriebenen Weise mit einer Dichtung zusammenwirken.

Vor allem bei Kombination einzelner oder mehrerer der vorbeschriebenen Merkmale und Maßnahmen ergibt sich eine Klemmverschraubung, bei der insbesondere auch die jeweils zu einer Abmessung gehörenden kleineren Klemmdurchmesser mit einer hohen Klemmkraft beaufschlagt, also mit einer hohen Zugentlastung versehen werden können, weil die Klemmfinger im Klemmbereich durch ihre Verdickung starr und fest sind, aber aufgrund ihrer dünneren Bereiche sehr gut an die unterschiedlichen Abmessungen angepaßt und gebogen werden können, um die Klemmbereiche mit den unterschiedlich dicken Rohren, Kabeln, Schläuchen oder dergleichen jeweils in eine gute Wirkverbindung zu bringen. Gleichzeitig ist es dabei möglich, die Dichtung in gewollter Weise vor allem im Klemmbereich mit einer dünnen Wandstärke zu versehen, so daß die Klemmkraft nahezu ohne Abpolsterung auf den zu klemmenden Körper selbst übertragen wird. Dennoch sind Maßnahmen möglich, um die Dichtigkeit sicherzustellen, selbst wenn diese relativ dünnwandige Dichtung zunächst über eine größere radiale Strecke gestaucht werden muß, bis sie zur Wirkung kommt. Es ergibt sich also insgesamt eine Klemmverschraubung, die unterschiedliche und zum Teil scheinbar einander widersprechende Forderungen gleichzeitig erfüllen kann, wobei sogar eine sich jeweils dem Klemmfortschritt anpassende Verringerung des Anzugsmomentes berücksichtigen läßt.

Nachstehend sind Ausführungsbeispiele der Erfindung mit den erfindungsgemäßen Merkmalen anhand der Zeichnung näher beschrieben. Es zeigt in zum Teil schematisierter Darstellung:
- Fig. 1 bis 7: jeweils teilweise in Seitenansicht und teilweise im Längsschnitt erfindungsgemäße Klemmverschraubungen mit einer Schraubhülse und einer damit über Gewinde verbindbaren Gegenhülse in Form einer Überwurfmutter, wobei die Überwurfmutter in Fig.3 weggelassen ist und wobei jeweils unterschiedlich geformte Klemmfinger und Dichtungen dargestellt sind,
- Fig.8 bis 11: teilweise in Seitenansicht und teilweise im Längsschnitt dargestellte Kabelverschraubungen mit wiederum abgewandelten Klemmfingern und Dichtungen in Klemmstellung, wobei wiederum jeweils abgewandelte Klemmfinger an Kabeln kleineren Durchmessers angreifen,
- Fig. 12a bis 12c: jeweils Teillängsschnitte von Klemmverschraubungen mit unterschiedlich gestalteten Klemmfingern und Dichtungen, wobei die Überwurfmutter sich in Ausgangsstellung befindet und demgemäß die Klemmfinger und die Dichtungen unverformt sind, wobei die Ausführungsform nach Fig.12a nicht unter Patentanspruch 1 fällt,
- Fig.12d: eine nicht erfindungsgemäße Ausführungsform, die aber eine zweckmäßige Ausgestaltungsmöglichkeit eines Merkmales der Erfindung zeigt,
- Fig.13a bis 13d: die der Fig.12a bis 12d entsprechenden Klemmverschraubungen jeweils nach dem Anziehen der Überwurfmuttern und Verformen der Klemmfinger und Dichtungen in ihre Klemmstellung an Kabeln oder dergleichen kleineren Querschnittes, wobei die Ausführungsform nach Fig.13a nicht unter Patentanspruch 1 fällt,
- Fig.14 bis 19: jeweils in teilweise längsgeschnittener Seitenansicht und in Stirnansicht unterschiedlich gestaltete Dichtungen zum Zusammenwirken mit Klemmverschraubungen gemäß den Figuren 1 bis 13,

- Fig.20a bis 20c, Fig.21a bis 21c und Fig.22a bis 22c: weitere teilweise im Längsschnitt gehaltene Seitenansichten von Dichtungen für Klemmverschraubungen,

- Fig.23: einen Teillängsschnitt einer Klemmverschraubung im Bereich des Klemmfingers und der Dichtung, wobei eine Überwurfmutter in Ausgangsstellung angeordnet ist, die an ihrer konischen Druckfläche abgestufte Führungsflächen hat, die mit entsprechenden Abstufungen an der radialen Außenseite des verdickten Bereiches des Klemmfingers zusammenpassen und eine stufenweise Verformung des Klemmfingers bei vorgegebener Lage seines Klemmbereiches ermöglicht,
- Fig.24: die Klemmverschraubung gemäß Fig.23 noch ohne die Dichtung und bei völlig abgenommener Überwurfmutter,
- Fig.25: einen Teillängsschnitt einer Klemmverschraubung, bei welcher ein relativ langer dicker Bereich des Klemmfingers gegenüber einem kurzen dünnen Bereich radial nach innen vorsteht, in Ausgangsstellung,
- Fig.26: die Klemmverschraubung nach Fig.25 nach dem Anziehen der Überwurfmutter, wobei etwa die Hälfte der Außenseite des dicken Bereiches an der sich verjüngenden Druckfläche der Überwurfmutter anliegt und der demgegenüber überstehende Teil des dickeren Bereiches des Klemmfingers den Abstand zu einem kleineren Kabel oder dergleichen überbrückt und sich zusätzlich in dessen Oberfläche klemmend eindrückt,
- Fig.27: eine abgewandelte Ausführungsform, bei welcher der dickere Bereich gegenüber einem kurzen dünneren Bereich radial sowohl nach innen als auch nach außen übersteht, wobei der radial nach außen gerichtete Überstand eine derartige Schräge aufweist, daß die Außenseite einen Teil des dünneren Bereiches überlappt,
- Fig.28: die Klemmverschraubung gemäß Fig.27 nach dem Anziehen der Überwurfmutter, wobei die gesamte sich verjüngende Druckfläche einen Teil der Außenseite des dickeren Bereiches einschließlich seiner an seinem Überstand gebildeten Verlängerung beaufschlagt,
- Fig.29: eine Klemmverschraubung mit einer Überwurfmutter, deren Druckfläche zwei Zonen unterschiedlicher Schrägung aufweist, wobei der dickere Bereich an der inneren, der Durchgangsöffnung der Überwurfmutter nahen Schrägfläche anliegt,
- Fig.30: eine der Fig.29 entsprechende Darstellung mit einem demgegenüber jedoch kürzeren dickeren Bereich und einem derart langen dünnen Bereich, daß dieser auch S- oder Z-förmig biegbar ist,
- Fig.31: die Klemmverschraubung nach Fig.30 nach einer weiteren Verformung und Verklemmung, wobei nun der dickere Bereich aufgrund der Verformbarkeit des dünneren Bereiches an der Innenwand der Durchgangsöffnung anliegt,
- Fig.32: eine teilweise im Längsschnitt gehaltene Ansicht des Klemmbereiches und des Gewindeanfanges der Schraubhülse, wobei die die Klemmfinger bildenden Schlitze mit Abstand vor dem Gewindeanfang enden,
- Fig.33: eine der Fig.32 entsprechende Darstellung, wobei die die Klemmfinger bildenden Schlitze bis zum Gewindeanfang reichen,
- Fig.34: eine den Figuren 32 und 33 entsprechende Darstellung, bei welcher die Schlitze sich axial über den Gewindeanfang hinaus erstrecken, also in das Gewinde hineinreichen,
- Fig.35: eine abgewandelte Ausführungsform, bei welcher die dünneren Bereiche der Klemmfinger zusätzlich beidseitige, in Umfangsrichtung angeordnete Einbuchtungen haben,
- Fig.36: eine der Fig.35 entsprechende Ausführungsform, wobei die durch die Einbuchtungen benachbarter Klemmfinger gebildeten Öffnungen zumindest teilweise durch eine Spritzhaut verschlossen sind,
- Fig.37: unterschiedliche Klemmfingerformen und Übergänge zu der Abstützung für die Dichtung, wobei die Abstützung entweder eine etwa radiale Schulter, eine Hinterschneidung, eine schwache oder stärkere oder hinterschnittene Nut sein kann,
- Fig.38: eine teilweise im Längsschnitt dargestellte Klemmverschraubung, bei welcher der Klemmeinsatz ein separat einsetzbares Teil ist,
- Fig.39: die Klemmverschraubung gemäß Fig.38 in auseinandergenommener Position (Explosionszeichnung),
- Fig.40: eine der Fig.38 entsprechende Darstellung, bei welcher statt einer Überwurfmutter eine als Druckstutzen ausgebildete Gegenhülse vorgesehen ist und der Klemmeinsatz ein separates loses Teil ist, wobei die Gegenhülse an ihrer dem Klemmeinsatz zugewandten Stirnseite eine sich konisch verjüngende ringförmige Druckfläche aufweist,
- Fig.41: eine Explosions-Darstellung der Klemmverschraubung gemäß Fig.40,
- Fig.42: eine Klemmverschraubung mit losem Klemmeinsatz und als Druckstutzen ausgebildeter Gegenhülse, wobei die sich konisch verjüngende Schrägfläche zum radialen Verformen der Klemmfinger an dem inneren Absatz der Schraubhülse vorgesehen ist und der Druckstutzen eine lediglich in einer radialen Ebene liegende Druckfläche aufweist, sowie
- Fig.43: die Explosions-Darstellung der Klemmverschraubung gemäß Fig.42.

Bei den nachfolgend näher erläuterten unterschiedlichen Ausführungsformen einer im ganzen mit 1 bezeichneten Klemmverschraubung sind jeweils einander entsprechende Teile mit gleichen Bezugsziffern oder -zahlen versehen, selbst wenn sie in ihrer Form voneinander abweichen. In Einzelfällen nicht beschriebene Teile oder Funktionen haben dabei dieselbe Bedeutung wie bei denjenigen Ausführungsbeispielen, bei denen diese Teile und Funktionen erläutert sind.

Die dargestellten Klemmverschraubungen 1 weisen jeweils eine Schraubhülse 2, eine damit verbindbare Gegenhülse 3, im folgenden auch Überwurfmutter 3 genannt, oder dergleichen Druckstück und einen mit Hilfe dieser Gegenhülse oder Überwurfmutter 3 gegen ein Kabel 4, Rohr, Schlauch oder dergleichen preßbaren Klemmeinsatz 5 auf.

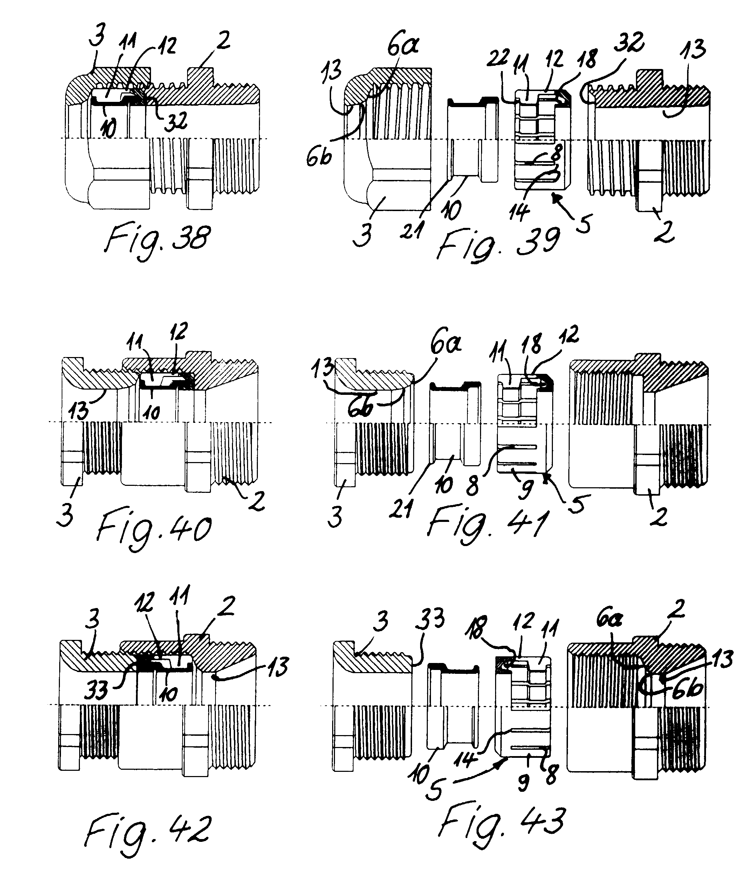

Obwohl dieser Klemmeinsatz 5 gemäß Fig.38 bis 43 - insbesondere bei Klemmverschraubungen aus Metall - ein separates Teil aus Metall oder Kunststoff sein kann, ist er bei den meisten dargestellten Ausführungsbeispielen mit der Schraubhülse 2 insbesondere einstückig verbunden.

Die Gegenhülse 3 übergreift den Klemmeinsatz 5 mit einer ringartigen Druckfläche 6 zumindest an der Stirnseite 7 des Klemmeinsatzes 5, kann jedoch gemäß der noch nachfolgenden Beschreibung insbesondere in Gebrauchsstellung auch weitere Bereiche insbesondere an der radial außen befindlichen Oberfläche des Klemmeinsatzes 5 beaufschlagen.

Mit Hilfe dieser ringartigen Druckfläche 6 wird beim Anziehen des Gewindes zwischen Schraubhülse 2 und Gegenhülse 3 aufgrund einer sich verjüngenden Form, zum Beispiel mittels Rundung oder mittels eines Konus, ein mit axialen, an der Stirnseite 7 mündenden Schlitzen 8 versehener, Klemmfinger 9 bildender Bereich des Klemmeinsatzes 5 radial gegen das Kabel 4, Rohr, Schlauch oder einem ähnichen Körper hin verformt, wobei zwischen dem Klemmeinsatz 5 und dem Kabel 4 oder dergleichen in der Regel eine Dichtung 10 angeordnet ist, die von den durch die Schlitze 8 oder ähnlichen Freiräumenan dem Klemmeinsatz 5 gebildeten Klemmfingern 9 durch deren radiale Verformung gegen das Rohr, Kabel oder dergleichen anpreßbar ist.

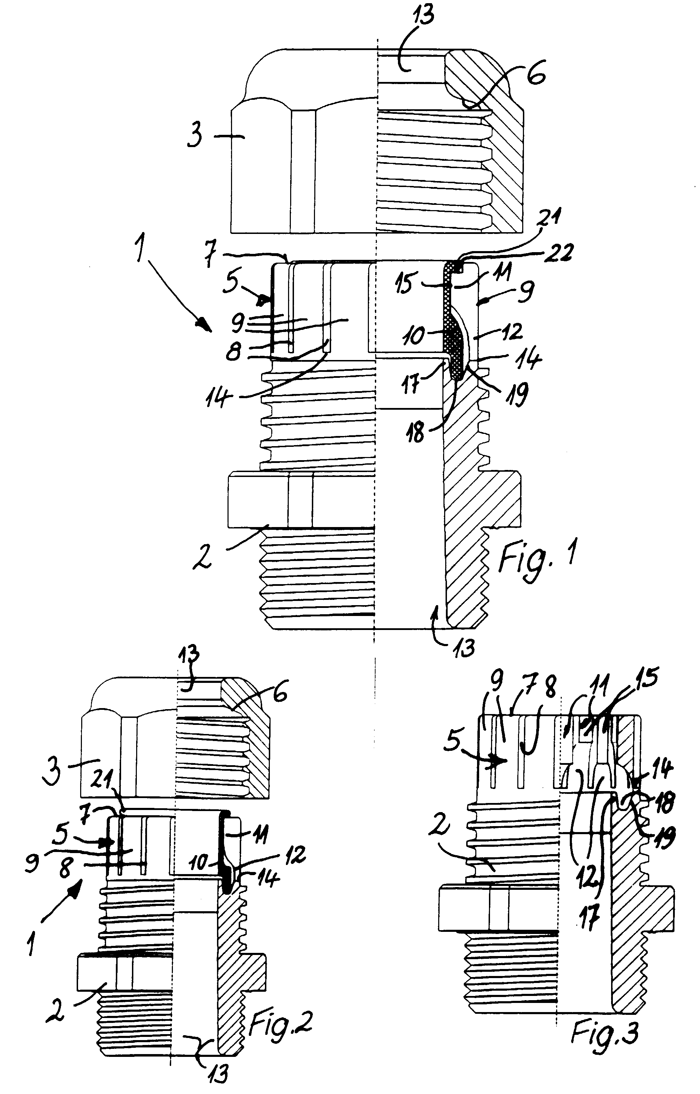

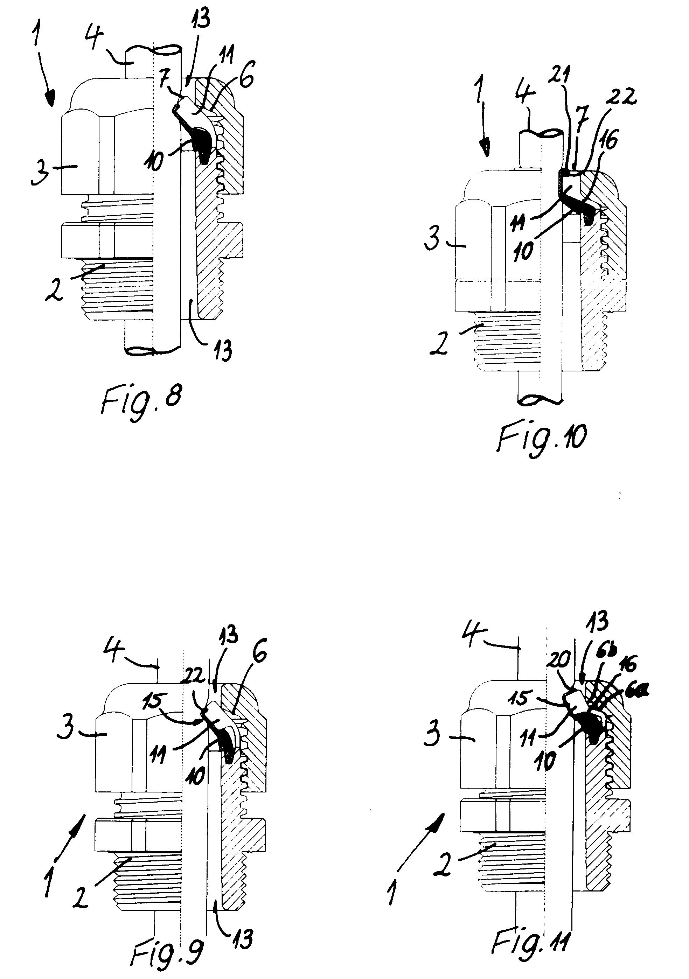

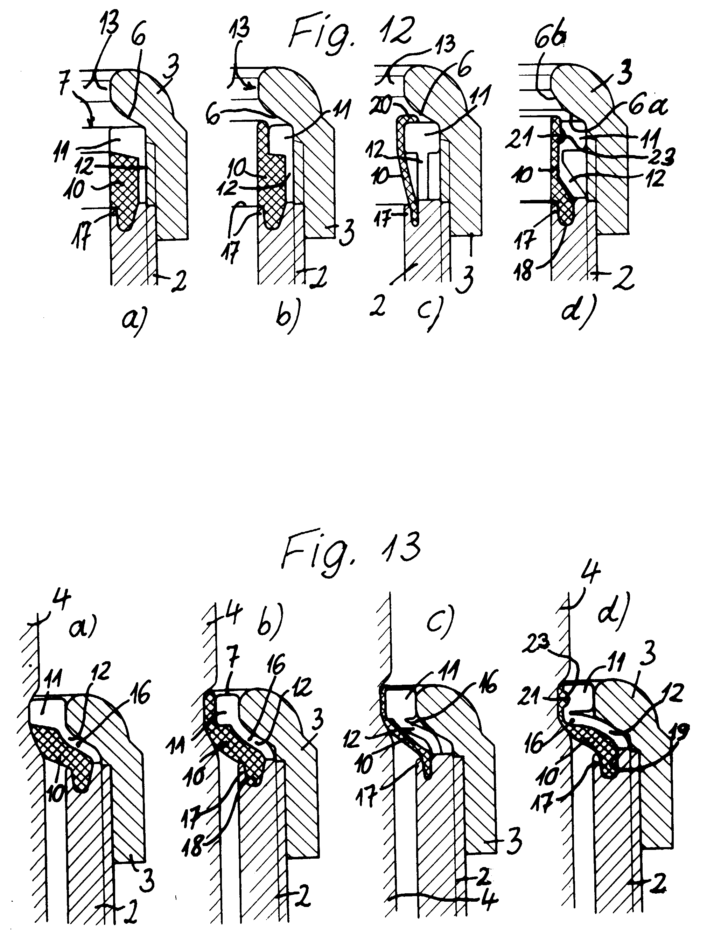

Während in den Figuren 1,2,4 bis 7, 12 u.21 die Klemmfinger 9 und somit auch die Dichtung 10 jeweils noch unverformt sind, erkennt man in den Figuren 8 bis 11 sowie auch in Fig. 13 die erwähnte radiale Verformung gegen ein Kabel 4 hin, die im Bereich der Stirnseite 7 am stärksten und axial demgegenüber nach innen oder unten versetzt am geringsten beziehungsweise gar nicht vorhanden ist.

Bei allen Ausführungsbeispielen ist vorgesehen, daß die Klemmfinger 9 jeweils zwei in axialer Richtung nebeneinander angeordnete Bereiche unterschiedlicher radialer Dicke haben, das heißt, in axialer Richtung der Klemmfinger 9 ist eine Querschnittsänderung vorgesehen, um diese verschiedenen Bereiche unterschiedlicher Dicke zu bilden. Der im Querschnitt dickere Bereich 11 eines Klemmfingers 9 umfaßt dabei an seinem freien Ende beginnend nahezu den gesamten Bereich oder weniger der Gesamtlänge des Klemmfingers 9, so daß der dünnere Bereich 12 den verbleibenden Rest der Gesamtlänge ausmacht. Man erkennt zum Beispiel in Fig.2 bis 7, 23 bis 29 und 32 bis 34 jeweils relativ lange dickere Bereiche 11 und entsprechend kürzere dünnere Bereiche 12, während die Abmessungsverhältnisse bei den Figuren 8 bis 13 eher umgekehrt sind, also kürzere dickere Bereiche 11 mit längeren dünneren Bereichen 12 kombiniert sind. So kann beispielsweise die Länge des dickeren Bereiches auch nur die Hälfte oder sogar nur ein Drittel der Gesamtlänge des Klemmfingers 9 betragen.

Die radiale Dicke des dickeren Bereiches 11 beträgt dabei wenigstens zwei Drittel des Maßes, welches sich zwischen dem Kerndurchmesser des Gewindes der Gegenhülse oder Überwurfmutter 3 und der stirnseitigen Durchgangsöffnung 13 für das Kabel 4 oder dergleichen durch die Gegenhülse 3, das heißt, dem größten Klemmdurchmesser, erstreckt. Somit verbleibt an dieser Stelle für die Dicke der Dichtung 10 ein entsprechend geringes Maß.

In den Ausführungsbeispielen wird deutlich, daß die radiale Dicke des dickeren Bereiches 11 des Klemmfingers 9 jeweils sogar wenigstens drei Viertel von dem Maß oder sogar das gesamte Maß betragen kann, welches sich zwischen dem Kerndurchmesser des Gewindes der Gegenhülse 3 und der stirnseitigen Durchgangsöffnung 13 durch die Gegenhülse 3, das heißt dem größten Klemmdurchmesser, erstreckt.

Durch diese relativ große radiale Abmessung des dickeren Bereiches 11 der Klemmfinger 9 kann auch ein Kabel 4 mit kleinerem Durchmesser gemäß den Figuren 8 bis 11 und 13 gut geklemmt werden, obwohl die Klemmfinger 9 zunächst über einen größeren radialen Weg verformt werden müssen, bis sie mit dem Kabel 4 in Kontakt gelangen.

Die Figuren 1 bis 6 u. Fig.8 zeigen Beispiele dafür, daß die radiale Querschnittsdicke des dünneren Bereiches 12 des Klemmfingers 9 von dem dickeren Bereich 11 ausgehend - insbesondere über eine Schräge und/oder Krümmung vorzugsweise an der radial innenliegenden Seite - gegen das Schlitzende 14 hin zumindest etwa über die Hälfte der Länge des dünneren Bereiches 12 abnimmt. Somit ergibt sich auch innerhalb des dünneren Bereiches 12 noch bereichsweise eine unterschiedliche Querschnittsdicke, die beim Verformen des Klemmfingers und Einschließen der Dichtung 10 vorteilhaft sein kann und zum Beispiel die Herstellung durch Spritzgießen erleichtert.

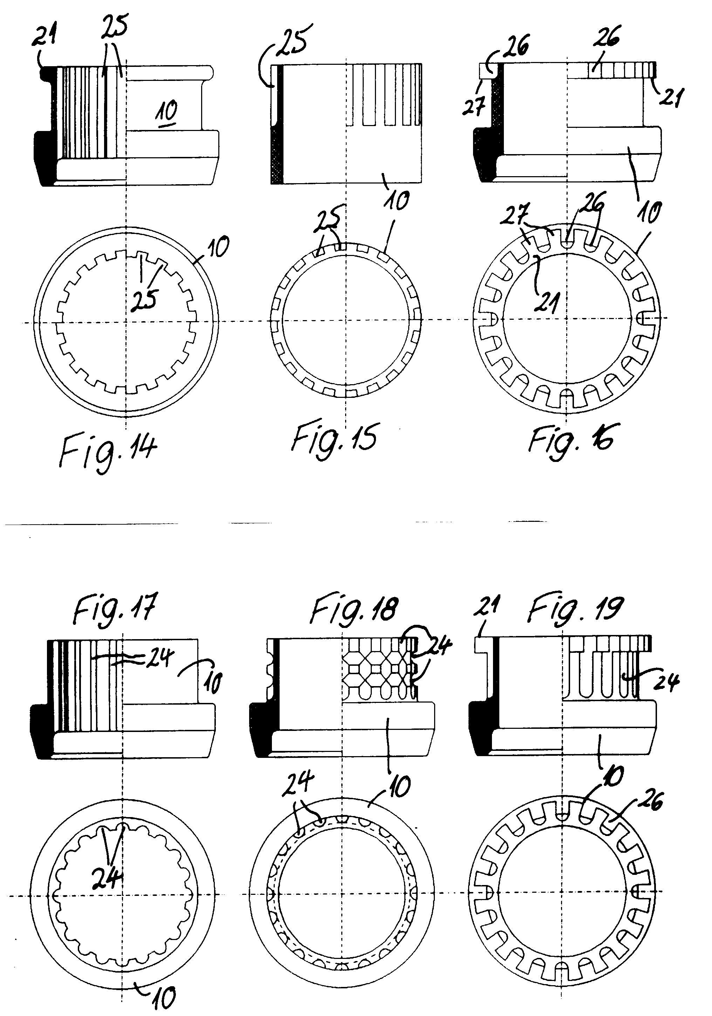

Aufgrund der angegebenen radialen Dicke des dickeren Bereiches 11 ist ermöglicht, daß der zwischen der Klemmfläche 15 des dickeren Bereiches 11 des Klemmfingers 9 und dem größten Klemmdurchmesser in Ausgangsstellung freibleibende Abstand wenigstens teilweise von der Dichtung 10 ausgefüllt ist, wie es bei den Figuren 1,2,4 bis 13 und Fig.21 dargestellt ist und wofür auch die noch zu beschreibenden Dichtungen gemäß den Figuren 14 bis 20 ausgebildet sind. Sind jedoch die Anforderungen an die Dichtigkeit der Klemmverschraubung 1 geringer, könnte ein unmittelbarer Kontakt der Klemmflächen 15 mit der Oberfläche des zu klemmenden Körpers erfolgen.

Die Figuren 10 u.13 verdeutlichen, daß die axiale Gesamtlänge der Klemmfinger 9 in Klemmstellung, also nach ihrer Verformung vor allem auch in radialer Richtung und einer damit einhergehenden axialen Verkürzung, etwa dem Überstand der Gegenhülse 3 über die Schraubhülse 2 in gegenseitig verschraubter Position und Klemmstellung entspricht und die Klemmfinger 9 in Klemmstellung mit einem Teil ihrer radialen Verdickung, also einem Teil ihres dickeren Bereiches 11, in die Durchgangsöffnung 13 der Gegenhülse 3 am radial inneren Ende der ringartigen Druckfläche 6 der Gegenhülse 3 hineinragen.

Während dabei die dickeren Bereiche 11 der Klemmfinger 9 bei den Ausführungsbeispielen gemäß Fig.10 u.13 ganz in die Durchgangsöffnung 13 hineinragen und praktisch bündig mit der Stirnseite der Gegenhülse 3 abschließen können, ist auch ein nur teilweises Eingreifen in die Durchgangsöffnung 13 gemäß den Figuren 8,9 u.11 möglich, welches sich auch beim Anziehen der Verschraubungen gemäß den Figuren 1 bis 7 ergäbe.

In diesem Zusammenhang ist bedeutungsvoll, daß die Länge des dünneren Bereiches 12 der Klemmfinger 9 so groß und seine radiale Dicke derart gering sind, daß der Klemmfinger 9 in seiner verformten Endstellung zwischen der ringartigen Druckfläche 6 der Überwurfmutter 3 und der Außenseite eines einen radialen Abstand zu dem Klemmeinsatz 5 und der Durchgangsöffnung 13 der Gegenhülse 3 aufweisenden kleineren Kabels 4, Rohres, Schlauches oder dergleichen vom Ende 14 der Schlitze 8 ausgehend zunächst schräg radial nach innen bis zu einem Wendepunkt oder Wendebereich 16 gebogen und von diesem Wendepunkt 16 zu dem die Verdickung aufweisenden freien Halteende des Klemmfingers 9 hin, also zu dem dickeren Bereich 11 hin, eine von der ersten Biegung abweichende zweite Biegung oder Gegenbiegung hat. Dies wird besonders deutlich beispielsweise in den Figuren 13a und 13b oder auch 13c, wo der verformte Klemmfinger 9 in seinem dünnen weichen Bereich 12 etwa S-förmig verformt ist. Auch Fig.10 offenbart eine etwa S- oder Z-Form der verformten Klemmfinger 9. Der dünnere Bereich 12 des Klemmfingers 9 erlaubt also, je nach Länge der beiden Bereiche 11 u.12 eine bestmögliche Anpassung der Klemmfinger 9 an die jeweiligen Erfordernisse und insbesondere auch an unterschiedliche Querschnitte, vor allem dabei an die Kabel 4 oder dergleichen mit den kleineren und kleinsten Durchmessern. In vorteilhafter Weise ist dabei aber jeweils der eigentliche, durch die dickeren Bereiche 11 gebildete Klemmbereich in sich selbst steif und stabil, so daß die von der Gegenhülse oder Überwurfmutter 3 und deren konischer Druckfläche 6 ausgehenden Kräfte gut auf den Mantel des zu klemmenden Körpers übertragen werden können, also die gewünschte Zugentlastung entsteht.

Die axiale Gesamtlänge der Klemmfinger 9 ist so gewählt, daß sie in Klemmstellung an einem kleineren Querschnitt zum Beispiel einem kleinen Kabeldurchmesser mit ihrer radial verdickten Klemm- bzw. Druckzone gemäß den Figuren 8,9 u.11 nahe der oder gemäß den Figuren 10 u.13 in der Durchgangsöffnung 13 angeordnet sind. Auch die Klemmfinger 9 mit längeren dickeren Bereichen 11 gemäß den Figuren 1 bis 7 werden in Klemmstellung zum Beispiel an einem kleineren Kabeldurchmesser nahe der Durchgangsöffnung 13 zu liegen kommen.

In Fig.3 ist angedeutet, daß die Klemmfinger 9 zumindest in ihrem radial verdickten Bereich 11 durch Schrägschlitze 8, welche von der Umgangsfläche schräg zum Radius nach innen verlaufen, gebildet sein können.

Ferner ist in Fig.3 erkennbar, daß die Klemmfinger 9 bei gleicher Gesamtlänge am Umfang des Klemmeinsatzes 5 verteilt verschieden lange dickere Bereiche 11 haben können, so daß ein Klemmfinger in Klemmstellung bei kleinerem Querschnitt, zum Beispiel Kabeldurchmessern schräg und der andere Klemmfinger etwa S- oder Z-förmig und mit seinem verdickten Bereich 11 in der Durchgangsöffnung 13 ganz oder teilweise anliegend angeordnet sein können.

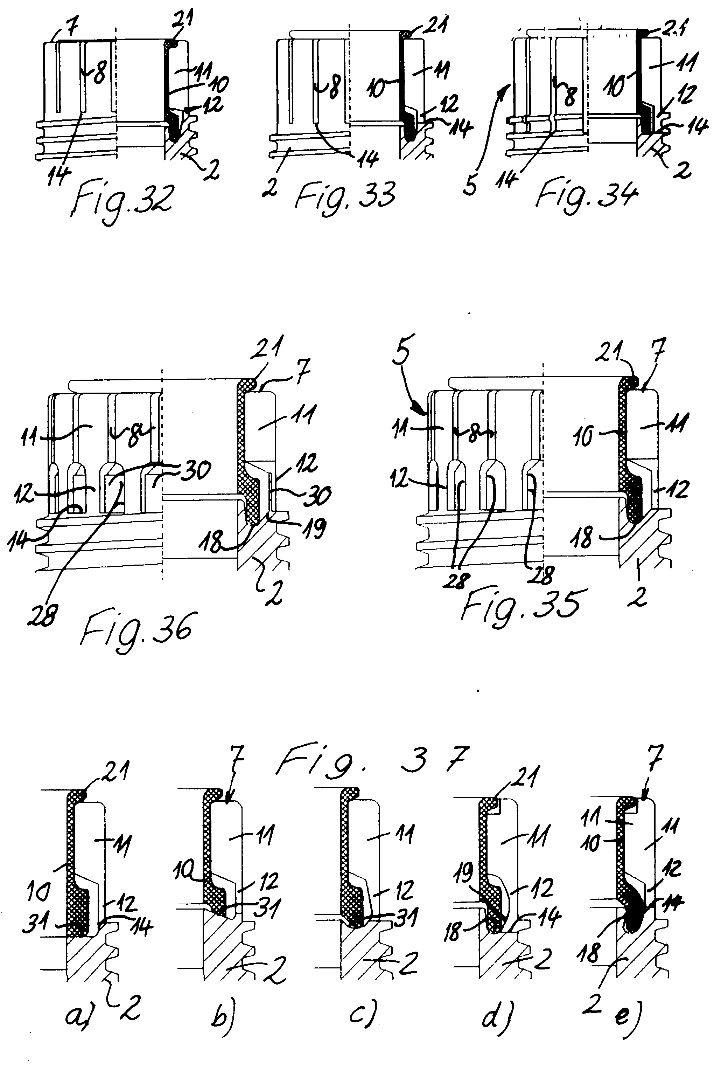

Eine weitere, in Fig 35 und 36 erkennbare Ausgestaltung kann darin bestehen, daß die Klemmfinger 9 durch ein- oder beidseitige Einbuchtungen 28 mindestens in ihrem dünneren Bereich 12 in ihrer Umfangserstreckung schmaler als in ihrem vorderen Bereich sein können. Dadurch wird die Flexibilität und Biegsamkeit des dünneren Bereiches 12 weiter gesteigert.

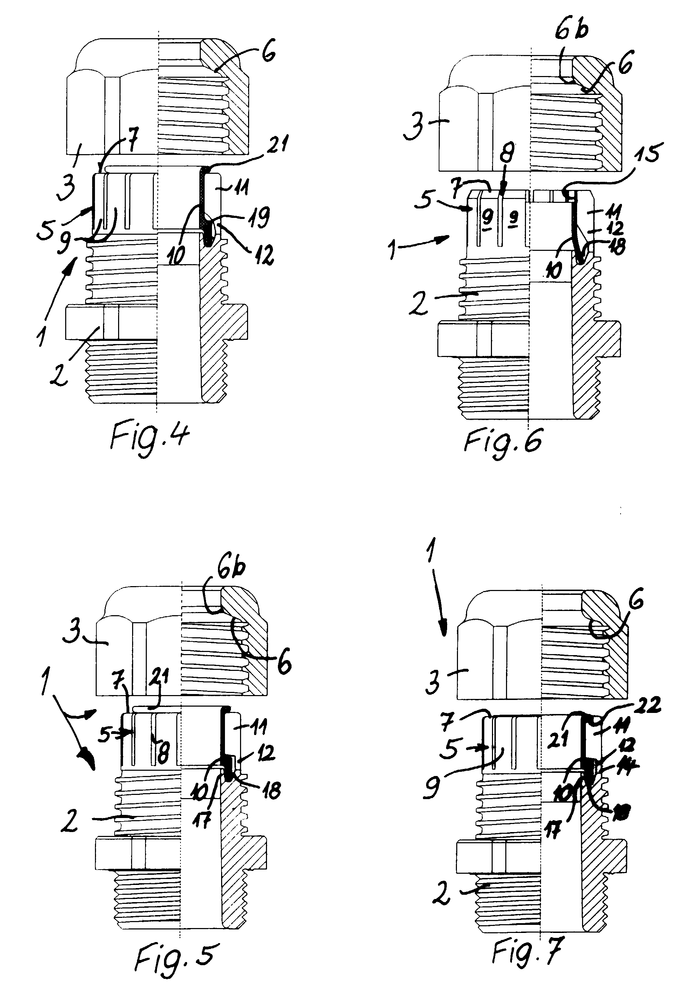

In Fig.12d ist angedeutet, daß die Klemmfinger 9 an ihrer Klemmoder Druckfläche 15 ausgespart und/oder profiliert sein können, während Fig.7 bis 10 Beispiele zeigen, wonach die Klemmfinger 9 an ihrer Stirnseite 7 abgesetzt sein können. An diesen Stellen kann dann jeweils die Dichtung 10 in noch zu beschreibender Weise formschlüssig gehalten und an einer ungewollten Verformung während des Einschnür-Vorganges und vor Erreichen der Endstellung gehindert werden.

Am Umfang des Klemmeinsatzes 5 können wenigstens drei Klemmfinger 9 verteilt sein, insbesondere wenn sie Einbuchtungen 28 haben,wobei die Fig. 1 bis 7 aber auch 35 und 36 erkennen lassen, daß eine größere Anzahl von Klemmfingern zweckmäßig ist und zum Beispiel zwölf oder noch mehr betragen kann, je nach Abmessung der gesamten Klemmverschraubung 1. Um eine sichere Halterung der Dichtung 10 zu ermöglichen, selbst wenn sie beispielsweise gemäß den Fig. 8 bis 11 während des Klemmvorganges stark verformt wird, ist es bei allen Ausführungsbeispielen vorgesehen, daß der Klemmeinsatz 5 im Bereich der axialen Abstützung für die Dichtung 10 eine in axialer Richtung vorstehende innere Haltehülse 17 hat, welche mit der Ausgangsstelle der Klemmfinger 9 eine ringförmige, zum axialen Ende der Klemmfinger 9 hin offene Ringnut 18 (vgl. insbes. Fig.3) bildet und den schraubhülsenseitigen Randbereich der Dichtung 10 ganz oder wenigstens teilweise in sich aufnimmt. Dabei ist es günstig, wenn der Klemmeinsatz 5 gemäß den dargestellten Ausführungsbeispielen einstückig an die Schraubhülse 2 angeformt ist.

Die Herstellung der Kabelverschraubung 1 und die Montierbarkeit der Dichtung 10 können dadurch verbessert werden, daß sich die radial innenliegende Klemmfläche der Klemmfinger 9 in die radial außenliegende Wandung 19 der Ringnut 18 fortsetzt. Beim Einschieben der Dichtung 10 gelangt diese somit gut geführt in die Ringnut 18.

In der Durchgangsöffnung 13 der Gegenhülse oder Überwurfmutter 3 erkennt man bei mehreren Ausführungsbeispielen eine ringförmig umlaufende Anlagefläche für die der Klemmstelle abgewandte Seite des verdickten Klemmstückes zur Abstützung des Klemmfingers, die beispielsweise im Ausführungsbeispiel nach Fig.10 etwa zylindrisch und in den Ausführungsbeispielen gemäß Fig.11 u.12d sich nach außen verjüngend kegelstumpfförmig ist, wobei die kegelstumpfförmige Ringfläche mit einer sich noch anschließenden zylindrischen Fläche kombiniert ist. Daraus ergeben sich unterschiedliche Möglichkeiten, Klemmfinger 9 mit unterschiedlich langen dickeren Bereichen 11 entweder an einer solchen kegelstumpfförmigen Fläche (Fig.11) oder innerhalb der Durchgangsöffnung 13 (Fig.10 u.13d) abzustützen.

Vor allem Fig. 10,11 u.13 verdeutlichen dabei, daß die sich verjüngende Druckfläche 6 der Gegenhülse 3 in Klemmstellung der Klemmfinger 9 an einem Kabel 4, Rohr, Schlauch oder dergleichen mit kleinerem Durchmesser zumindest mit ihrem größten Durchmesserbereich auf dem der Schraubhülse 2 nahen Bereich der Klemmfinger 9 außenseitig aufsitzen kann, so daß die Klemmfinger nicht nur an ihrem dickeren Bereich 11, sondern auch an ihrem dünneren Bereich 12 durch die Gegenhülse 3 gehalten und nach außen abgestützt werden und in ihrer verformten Klemmstellung über praktisch die gesamte Länge gehalten werden.

Da während des Aufschraubens der Gegenhülse 3 beim Befestigen an einem Kabel 4, Rohr oder dergleichen mit kleinerem oder kleinstem Durchmesser zunächst die Klemmfinger 9 über eine größere radiale Abmessung "leer" verformt werden, also keinen Widerstand erhalten, dann aber beim Auftreffen auf die Oberfläche des zu klemmenden Körpers einer weiteren Verformung einen größeren Widerstand entgegensetzen, ist in einzelnen Ausführungsbeispielen, zum Beispiel Fig.12b oder 12d vorgesehen, daß die ringartige Druckfläche 6 der Gegenhülse 3 im Längsschnitt gesehen vom größeren Durchmesser ausgehend unter einem kleinen Winkel relativ zum Radius oder Querschnitt etwa geradlinig nach innen verläuft und in ihrem weiteren Verlauf eine Richtungsänderung in dem Sinne aufweist, daß ihr weiterer Verlauf zur Innenseite oder Achse hin gegenüber dem Radius einen größeren Winkel hat. In Fig.12d sind diese beiden Abschnitte der Druckfläche 6 mit 6a (kleinerer Winkel zum Querschnitt) und 6b (größerer Winkel) gekennzeichnet. Dadurch wird erreicht, daß in der ersten Phase der Verformung über eine relativ kleine axiale Verschiebung der Überwurfmutter 3 die Klemmfinger 9 relativ stark in radialer Richtung einwärtsgebogen werden, während sie in dem zweiten Teil ihrer Verbiegung nur noch langsamer verformt werden, also zu ihrer Verformung für eine große Haltekraft ein geringeres Drehmoment beim Anziehen der Überwurfmutter 3 erforderlich ist, was in dem Augenblick auftritt, in dem der Widerstand zum Beispiel durch das Kabel 4 zunimmt. Somit ist durch diese Maßnahme erreicht, daß die Klemmverschraubung 1 einerseits möglichst kurz gebaut werden kann, andererseits aber vor allem bei dem Einklemmen von Körpern mit kleineren Durchmessern, der dann erforderliche größere Anpreßdruck über den günstigeren, das heißt schlankeren Druckkonus erzeugt wird, ohne daß das Drehmoment an dem Werkzeug in der Relation zum Anpreßdruck in gleichem Maße ansteigt.

Dabei kann wenigstens ein Drittel der radialen Erstreckung der ringartigen Druckfläche 6 unter dem kleineren Winkel und der Rest unter dem größeren Winkel verlaufen. Eventuell genügt es, wenn wenigstens zwei Drittel der radialen Erstreckung der ringartigen Druckfläche 6 unter dem kleineren Winkel und der Rest unter dem größeren Winkel verlaufen.

Während beim Ausführungsbeispiel nach Fig.12b die Richtungsänderung von dem spitzeren oder kleineren Winkel zu dem größeren Winkel hin winkelförmig erfolgt, kann sie gemäß den Fig. 12a oder 12c bogenförmig oder gerundet, vorzugsweise ballig und insbesondere konvex sein. Es ergibt sich dann ein allmählicher Übergang bei der Zunahme des aufbringbaren Drehmomentes entsprechend der weiteren Zunahme des Anpreßens der dickeren Bereiche 12 der Klemmfinger 9 an einen Körper mit kleinerem Querschnitt. Zwar wird diese Maßnahme bei einem Körper mit größerem Querschnitt nicht wirksam, sondern bei einem Körper mit größerem Querschnitt ist die Verklemmung schon durchgeführt, bevor der Bereich des größeren Winkels der Druckfläche 6 zum Tragen kommt, jedoch ergibt sich an einem Körper größeren Querschnittes bei einer Klemmverschraubung 1 auch mit dem ersten Bereich der Druckfläche 6 eine so starke Verklemmung, daß dabei die geforderte Zugentlastung erreicht wird.

Die Klemmfinger 9 gehen von der Stirnseite der Schraubhülse 2 aus und in der Mehrzahl der dargestellten Ausführungsbeispiele befindet sich ihre ganze Außenseite etwa auf der Höhe des Kerndurchmessers des Gewindes der Schraubhülse 2 oder der Gegenhülse 3. Dies ist vor allem deutlich in den Fig.12a u.12b zu erkennen. Es ist aber gemäß Fig.12c auch möglich, daß die Außenseite der Klemmfinger 9 in ihrem radial dünneren Bereich 12 radial nach innen versetzt ist. Um so ausgeprägter wird in Klemmstellung die S-förmige Verformung des dünneren Bereiches 12. Der verdickte Bereich 11 steht demgemäß gegenüber dem dünneren Bereich 12 nach innen, aber auch radial nach außen über. Dadurch wird begünstigt, daß sich die Dichtung 10 in der Ringnut 18 und an der Haltehülse 17 abstützt und sich trotzdem in axialer Richtung mindestens teilweise in die Klemmstellen der verdickten Bereiche 11 der Klemmfinger 9 erstrecken und bei deren Verformen gut mitverformen kann. Fig.12a u. Fig.13a zeigt zwar ein Ausführungsbeispiel, bei welchem die Dichtung nicht unter den verdickten Bereichen 11 zwischen diesen und der Kabeloberfläche zu liegen kommt, jedoch ist bei allen übrigen Ausführungsbeispielen die Dichtung so lange, daß sie den verdickten Bereich 11 der Klemmfinger 9 gemäß Fig.6 teilweise oder gemäß den übrigen Ausführungsbeispielen vollständig beaufschlagt. In der Mehrzahl der Fälle, beispielsweise in den Ausführungsformen gemäß Fig. 1, 2 sowie 4 u.5, aber auch Fig.12b bis 12d ist die Dichtung 10 ganz durch den Bereich der radial verdickten Klemmfinger 9 und deren dickeren Bereich 11 hindurchgeführt und steht sogar über die Klemmfinger 9 an deren Stirnseite 7 über. Fig.12c und 13c deuten an, daß dabei der Dichtungsrand von der sich verjüngenden Druckfläche 6 an die Stirnseite 7 der Klemmfinger 9 andrückbar und dadurch während des Verschraubungsvorganges festklemmbar ist. Es ist gut erkennbar, daß nach einer geringfügigen Verschraubung der Überwurfmutter 3 diese den in Fig.12c erkennbaren Überstand 20 der Dichtung 10 mit der Druckfläche 6 erfaßt und somit zumindest über einen Teil des sich anschließenden Verformungsweges beaufschlagt und festhält. Dadurch wird die Dichtung 10 in diesem Bereich trotz des Einschnür-Vorganges an einer Einfaltung oder gar einem Einrollen gehindert.

Während bei den Ausführungsbeispielen gemäß Fig.12a und 12b die Dichtung 10 einen Absatz hat und ihr im Querschnitt dickerer Bereich innerhalb der dünnen Bereiche 12 der Klemmfinger 9 und ihr im Querschnitt dünner Bereich zumindest teilweise innerhalb der verdickten Bereiche 11 der Klemmfinger 9 angeordnet sind, zeigt Fig. 12c, daß die in dem Klemmeinsatz 5 und der Haltehülse 17 eingesetzte Dichtung 10 im radial dünneren Bereich 12 der Klemmfinger 9 zumindest bis unter die Klemmstellen der verdickten Bereiche 11 der Klemmfinger 9 von ihrem Außendurchmesser ausgehend in radialer Erstreckung einen Abstand zum Innendurchmesser der radial dünneren Bereiche 12 der Klemmfinger 9 aufweisen kann. Es kann also entweder eine Formdichtung oder eventuell sogar eine schlauchförmige Dichtung Verwendung finden. Ein Beispiel für eine solche schlauchförmige Dichtung mit etwa gleichbleibender radialer Dicke zeigt auch Fig.15.

Die Dichtung 10 kann gemäß Fig.12b sowie weiteren Ausführungsbeispielen mit ihrem Absatz ganz durch den oder gegebenenfalls über den radial dickeren Bereich 11 der Klemmfinger 9 reichen, also zumindest in Ausgangsstellung aus dem Klemmeinsatz 5 an der Stirnseite 7 vorstehen. Dadurch wird sichergestellt, daß auch in verformter Lage an einem dünneren Körper die gewünschte Dichtigkeit erreicht wird.

Um die Dichtung 10 während ihrer Einschnürung, bevor sie an dem zu klemmenden Körper eingeklemmt wird, an ungewollten Verformungen zu hindern, die später zu Undichtigkeiten führen, sind mehrere Ausführungsbeispiele vorgesehen, bei denen an der der Haltehülse 17 im Inneren des Klemmeinsatzes 5 abgewandten Stirnseite der Dichtung 10 ein umlaufender Wulst 21 oder eine ähnliche Verstärkung der Dichtung 10 vorgesehen ist, der die freien Enden der verdickten Bereiche 11 der Klemmfinger 9 (Fig.2,4,5 u.11) oder dort angeordnete Aussparungen 22 (Fig.1 u.7 bis 10) übergreift oder in an den Klemmflächen 15 eingesenkte Ausnehmungen 23 (Fig.12d u.Fig.13d) eingreift. Einen entsprechenden Wulst zeigen auch die separat in den Fig.14,16,19 sowie 20a, 20b und 20c dargestellten Form-Dichtungen 10.

Versuche haben gezeigt, daß durch einen solchen Wulst 21 entweder in Verbindung mit der Stirnseite 7 oder einer dort vorhandenen Aussparung 22 oder aber auch Ausnehmungen 23 eine Dichtung 10 daran hindert, bei ihrer Einschnürung vor Erreichen der Kabeloberfläche nach innen eingerollt zu werden, das heißt, es wird verhindert, daß die Dichtung 10 durch die relativ starke Einschnürung ganz oder teilweise unwirksam wird.

Eine andere oder zusätzliche Möglichkeit, eine Dichtung 10 stark einschnüren zu können, ohne daß sie unwirksam wird, besteht darin, daß die Dichtung 10 zumindest im Klemmbereich 15 der Klemmfinger 9 an ihrem inneren und/oder äußeren Umfang umlaufende und/oder axial verlaufende Aussparungen, Ausnehmungen, Rillen 24, Rinnen, Nuten 25 oder sonstige Material- oder Wandungsschwächungen aufweist, die beim Verformen der Klemmfinger 9 und dem daraus resultierenden, in Umfangsrichtung wirksamen Stauchen der Dichtung 10 zusammenpreßbar sind. Durch diese Rillen 24, Nuten 25 oder sonstigen Materialschwächungen wird gewissermaßen der Platz zur Verfügung gestellt, der beim Stauchen der Dichtung benötigt wird, ohne daß dabei Dichtungsmasse selbst verdrängt werden muß. Demgemäß läßt sich eine solche Dichtung in Umfangsrichtung zusammenstauchen, ohne daß es zu unkontrollierbaren und ungewollten Ausweichbewegungen an der Dichtung kommt, die sonst zu einem Einrollen des Dichtungsrandes oder einem ungleichmäßigen Einfalten führen könnten, so daß die Dichtigkeit nicht mehr sichergestellt wäre.

Die Fig.14 bis 22 zeigen dabei unterschiedlichste Möglichkeiten. Die Rillen 24, Nuten 25 oder dergleichen können am Umfang der Dichtung 10 axial oder in Längsrichtung, schräg oder schraubenlinienförmig verlaufen und beispielsweise eine trapezförmige Querschnittsprofilierung haben.

Fig.14 zeigt beispielsweise an der Innenseite der Dichtung 10 axial über die gesamte Länge der Dichtung 10 verlaufende Nuten 25. Fig.15 ist ein Beispiel für eine Dichtung 10, bei welcher an der Außenseite in axialer Richtung verlaufende Nuten nur über etwa den Klemmbereich angeordnet sind.

Fig.16 zeigt ein Ausführungsbeispiel, bei welchem die Dichtung 10 einen durch Schlitze 26 oder Nuten in Segmente 27 aufgeteilten ringförmigen Wulst 21 an ihrer dem Klemmeinsatz 5 abgewandten äußeren Stirnseite hat, so daß sich vor allem dieser Wulst beim Einschnüren und Stauchen in radialer Richtung gut verformen kann.

Fig.17 zeigt eine Ausführungsform, die weitgehend der der Fig.14 entspricht, wobei jedoch die axial an der Innenseite verlaufenden Rillen 24 eine abgewandelte Querschnittsform haben.

Bei Fig.18 sind in axialer Richtung verlaufende Rillen 24 an der Außenseite der Dichtung 10 mit solchen kombiniert, die in Umfangsrichtung laufen, so daß sie sich kreuzen, während Fig.19 ein Ausführungsbeispiel zeigt, bei welchem an der Außenseite in axialer Richtung verlaufende Rillen oder Nuten 25 mit Schlitzen 26 an dem Wulst 21 kombiniert sind bzw. darin übergehen.

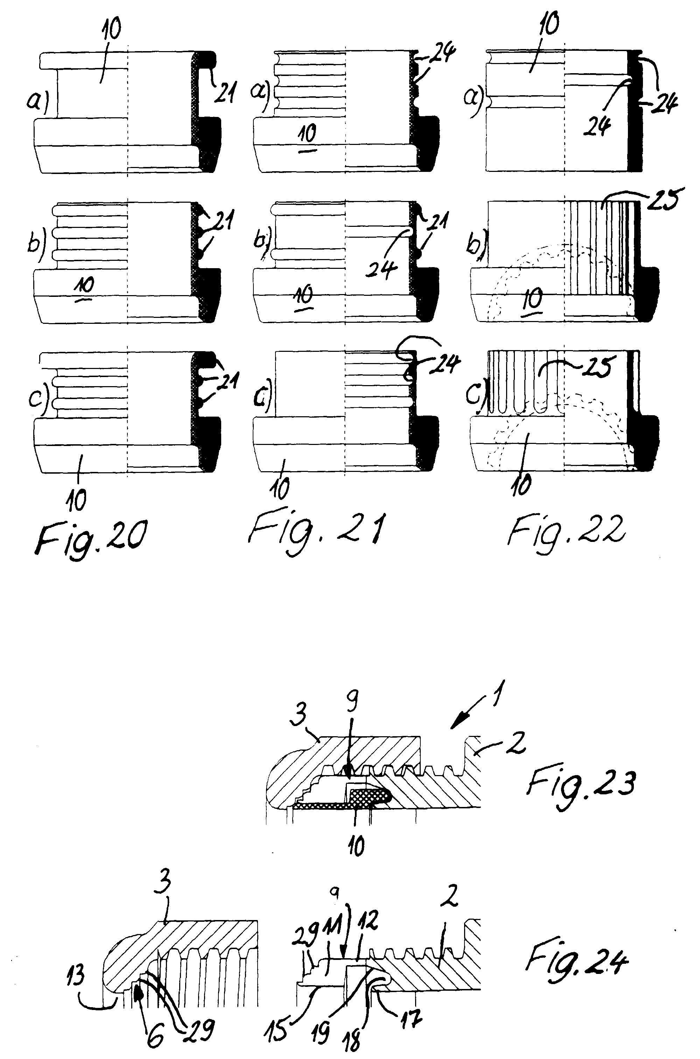

Fig.21a zeigt eine Ausführungsform mit an der Außenseite umlaufenden parallelen Rillen 24, während Fig.21b eine Lösung zeigt, bei der im Inneren eine Rille 24 in Umfangsrichtung angeordnet ist, am Außenumfang jedoch zwei umlaufende Wülste 21 mit Abstand zueinander vorgesehen sind.

Fig.21c zeigt im Inneren drei in Umfangsrichtung angeordnete Rillen 24, während Fig.22a zwei außenseitige und eine innenseitig am Umfang umlaufende Rille 24 bei einer etwa schlauchförmigen Dichtung 10 darstellt.

Die Fig.22b und 22c zeigen wiederum innen- bzw. außenseitige axial über einen Teil oder die ganze Länge verlaufende derartige Rillen oder Nuten 25.

Die Fig.20b, 20c und 21b verdeutlichen, daß die Dichtung 10 an ihrem inneren und/oder äußeren Umfang Erhebungen, Stege, Wülste 21 oder dergleichen Verstärkungen aufweisen kann, welche die Dichtung 10 bei starker Einschnürung durch den Klemmeinsatz 5 stabilisieren. Eine besonders günstige Kombination ergibt sich dabei bei Verwendung eines Klemmeinsatzes gemäß Fig.12d und 13d, wonach nämlich eine solche Erhebung 21 an der äußeren Fläche der Dichtung 10 in eine entsprechende Vertiefung oder Ausnehmung 23 der Klemmfinger 9 eingreifen kann.

Versuche haben gezeigt, daß die erwähnten Möglichkeiten, die Dichtung 10 zu verstärken oder zu schwächen oder gar eine Kombination von Verstärkungen und Schwächungen vorzusehen, dazu führt, daß diese Dichtung 10 stark eingeschnürt und dabei gestaucht werden kann, ohne ihre Dichtwirkung zu verlieren, wobei vor allem dafür gesorgt wird, daß während des Stauchungsvorganges keine Verformungen auftreten, durch die die Dichtung ganz oder bereichsweise unwirksam werden könnte.

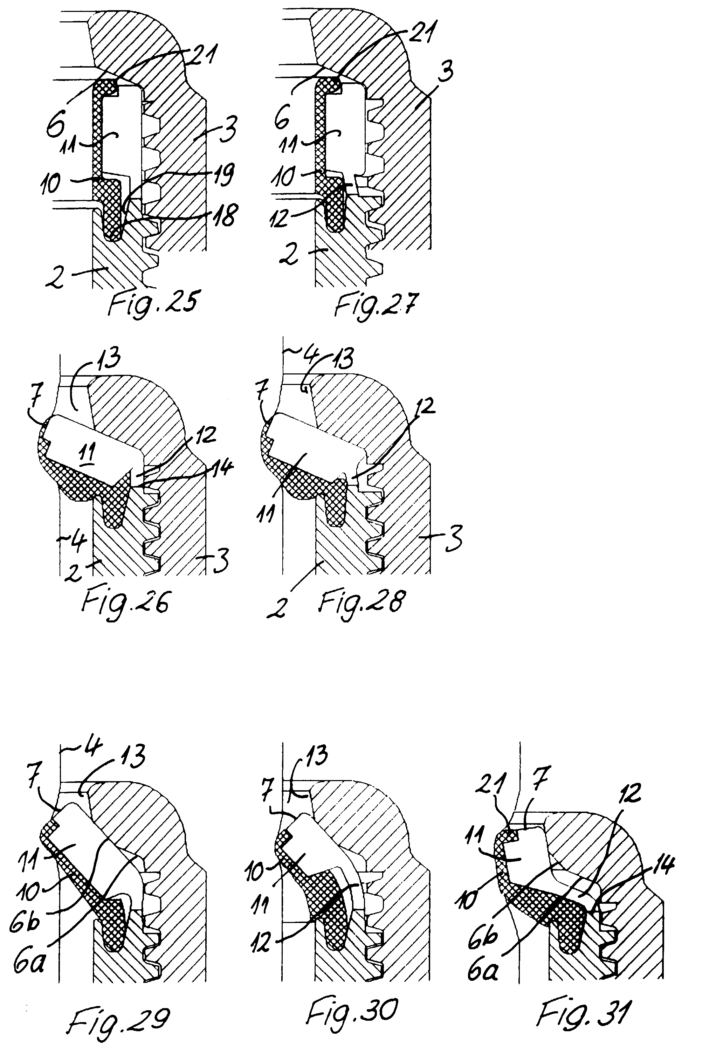

Eine weitere Ausgestaltung der Erfindung ist im Ausführungsbeispiel nach Fig.23 und 24 gezeigt. In diesem Falle haben die Klemmfinger 9 an ihrer ihrer Klemmfläche 15 abgewandten Seite eine mit der ringartigen Druckfläche 6 der Gegenhülse oder Überwurfmutter 3 in Wirkverbindung befindliche Führungsfläche, die bei der Verschraubung und der daraus resultierenden Verformung der Klemmfinger 9 in Anlage mit der ringförmigen Druckfläche 6 bleibt. Der diese Führungsfläche aufweisende, verdickte Klemmbereich 11 der Klemmfinger 9 kann auf diese Weise mit seiner Führungsfläche an der ringförmigen Druckfläche 6 unter Verformung des dünneren Klemmfingerbereiches 12 entlanggleiten, das heißt, der dickere Bereich 11 behält auch während der radialen Verformung des Klemmfingers 9 seine Stellung relativ zur Kabeloberfläche bei und hat somit in Gebrauchsstellung an Querschnitten unterschiedlicher Durchmesser jeweils die gewünschte Lage, bei welcher seine Klemmfläche 15 eine optimale Position hat.

Vor allem in Fig.24 erkennt man, daß dabei die Führungsfläche des Klemmfingers 9 und die ringförmige, konisch angeordnete Druckfläche 6 der Gegenhülse oder Überwurfmutter 3 einander in der Größe etwa entsprechende, insbesondere etwa rechtwinklige, Abstufungen 29 aufweisen, wobei die Übergänge der einen zur nächsten Stufe gerundet sind, aber auch abgeschrägt sein könnten. Die Zunahme der Klemmung gemäß den Abstufungen 29 erfolgt also in einzelnen Sprüngen jeweils unter erneuter Zentrierung der Klemmfingerenden. Durch diese Maßnahmen bleibt die eigentliche Klemmfläche 15 bei der Verformung der Klemmfinger 9 und der Relativbewegung entlang dem Innenkonus der Überwurfmutter 3 also ständig parallel zu sich selbst, so daß die Klemmung an Kabeln 4 unterschiedlicher Größen jeweils mit der gewünschten Position der Klemmfläche 15 unabhängig von der Stärke der Verformung der Klemmfinger 9 erfolgt. Die Klemmfläche 15 kann also ganz gezielt auf die Oberfläche des zu klemmenden Körpers auftreffen und zwar sowohl bei dickeren als auch bei dünneren Querschnitten einer jeweiligen Klemmverschraubung 1.

Gegenüber einer axial verlaufenden Fläche einer solchen Abstufung 29 an den Klemmfingern 9 ist jeweils ein in axialer Richtung wirksamer Anschlag durch die jeweils auf dem größeren Durchmesser liegende Stirnseite der nächsten Abstufung 29 gebildet. Die jeweils auf dem größten Durchmesser liegende Stirnseite der letzten Abstufung bildet also in jedem Falle einen solchen axialen Anschlag. Dabei könnten solche Abstufungen 29 auch bei Klemmfingern 9 vorgesehen sein, die eine andere Form haben, beispielsweise nicht aus einem dickeren Bereich 11 und einem dünneren Bereich 12 zusammengesetzt sind, sondern beispielsweise eine über ihre ganze Länge gleichbleibende Dicke haben und/oder zu einem separaten Klemmring oder Klemmeinsatz 5 (vgl. Fig.38 bis 43) gehören. Dabei kann schon eine Abstufung 29 einen entsprechenden Vorteil haben, jedoch ist es günstig, wenn wenigstens zwei Abstufungen und daran in radialer Richtung anschließend noch ein stirnseitiger Anschlag an den Klemmfingern vorhanden sind oder es können gemäß Fig.23 und 24 drei Abstufungen und eine vierte Anschlagstufe in radialer Richtung übereinander vorhanden sein, um entsprechend viele Stufensprünge der zu erfassenden Klemmdurchmesser berücksichtigen zu können.

Auch dabei kann es jedoch vorteilhaft sein, daß die Klemmfinger 9 die dünneren Bereiche 12 haben, die sich bei der radialen Verformung der Klemmfinger 9 nach innen an diese Verformung bestmöglich anpassen können und bevorzugt etwa S-förmig gebogen werden, da diese dünneren Bereiche 12 den Übergang zwischen der starrbleibenden Schraubhülse 2 einerseits und dem parallel zu sich selbst nach innen verstellbaren dickeren Bereich 11 herstellen.

In den Figuren 25 bis 43 sind weitere Ausführungsbeispiele von Klemmverschraubungen 1 dargestellt, die unterschiedliche Ausgestaltungen zeigen.

Fig.25 und 26 zeigt einen Teillängsschnitt durch den stirnseitigen Bereich der Schraubhülse 2 und die Überwurfmutter 3 mit einem Klemmfinger 9, bei welchem sich der dickere Bereich 11 gegenüber dem dünneren Bereich 12 ausschließlich radial nach innen erstreckt, also die im dünneren Bereich 12 befindliche Wandschwächung von der Innenseite der Kabelverschraubung ausgeht. Dabei ist der dickere Bereich 11 gegenüber dem dünneren Bereich 12 relativ lang, so daß beim Verklemmen eine gute Anpassung des Klemmfingers an den inneren Verlauf der Überwurfmutter möglich ist, wie man es in Fig.26 erkennt. In Klemmstellung liegt der dickere Bereich 12 mit seiner Außenseite an der gesamten radialen Erstreckung der sich konisch verjüngenden Druckfläche 6 an und der darüber hinausragende Überstand kann den Zwischenraum zwischen dieser Druckfläche 6 und der Querschnittsoberfläche nicht nur überbrücken, sondern auch die gewünschte starke Einschnürung und Verpressung des zu klemmenden Körpers bewirken. Dabei wird gleichzeitig deutlich, wie auch die Dichtung 10 verformt und verpreßt wird und die ursprünglich teilweise freien Hohlräume ausfüllt, so daß in der Klemmstellung gemäß Fig.26 einerseits eine hohe Zugentlastung und andererseits eine gute Abdichtung erreicht wird, obwohl nur relativ wenig Gewindegänge miteinander verschraubt werden mußten, wie der Vergleich der Figuren 25 und 26 zeigt.

Das Ausführungsbeispiel gemäß Fig.27 und 28 ähnelt dem vorbeschriebenen Ausführungsbeispiel, jedoch steht der relativ lange dickere Bereich 11 der Klemmfinger 9 gegenüber dem dünneren Bereich 12 radial nach beiden Seiten über. Damit in der verklemmten und verformten Position gemäß Fig.28 wiederum praktisch die gesamte Druckfläche 6 in Kontakt mit dem sich an den dünneren Bereich 12 anschließenden Teil des dickeren Bereiches 11 der Klemmfinger 9 ist, ist dabei der Übergang von dem dünneren Bereich 12 zu dem dickeren Bereich 11 in der Weise schräggestaltet, daß sich gemäß Fig.27 in der nicht verformten Position eine leichte Hinterschneidung bildet.

Bei den Ausführungsbeispielen gemäß Fig.29 bis 31 ist wiederum die Druckfläche 6 in Abschnitte 6a und 6b mit unterschiedlichen Winkeln unterteilt.

Fig.29 zeigt, wie ein Klemmfinger 9 mit einem relativ langen dickeren Bereich 11 in Klemmstellung an dem Abschnitt 6b der sich konisch verjüngenden Druckfläche 6 zur Anlage kommt und eine stabile Lage findet, wobei der dünnere Bereich teilweise noch an dem Innengewinde der Überwurfmutter 3 abgestützt sein kann.

Bei dem Ausführungsbeispiel gemäß Fig.30 und 31 ist der dickere Bereich 11 gegenüber dem vorbeschriebenen Ausführungsbeispiel erheblich kürzer, also der dünnere Bereich 12 erheblich länger. In einer ersten Klemmstellung gemäß Fig.30 an einem vergleichsweise großen Querschnitt kann der dickere Bereich 11 mit seiner Außenseite wiederum an dem Abschnitt 6b der Druckfläche 6 anliegen und abgestützt werden. Bei einer weiteren Verschraubung zum Erfassen eines dünneren Querschnittes kann sich jedoch der relativ lange dünne Bereich 12 etwa S-förmig verformen, so daß nun der kürzere dickere Bereich 11 in die Durchgangsöffnung 13 gelangt und sich an deren Wandung abstützt. Diese Darstellung und dieses Ausführungsbeispiel macht deutlich, daß jeweils mit einer Klemmverschraubung 1 einer bestimmten Abmessung Querschnitte unterschiedlicher Dicke erfaßt werden können, wobei die größte Dicke dem Durchmesser der Durchgangsöffnung 13 entsprechen kann, aber auch relativ kleine Durchmesser eines solchen Körpers mit derselben Klemmverschraubung 1 mit einer hohen Zugentlastung eingeklemmt werden können sollen. Die meisten vorbeschriebenen Ausführungsbeispiele zeigen dabei jeweils Kabel 4 mit kleinem Durchmesser und auch Fig.30 zeigt ein Kabel mit kleinerem Durchmesser, nicht jedoch mit dem kleinstmöglichen Durchmesser. In Fig. 32 ist der verdickte Bereich 11 der Klemmfinger 9 nahezu bis zum Schlitzende dargestellt.

In den Figuren 32 bis 34 ist angedeutet, wie das Schlitzende 14 in Relation zum Anfang des Gewindes der Schraubhülse 2 unterschiedlich angeordnet sein kann. Während bei Fig.32 das Schlitzende 14 in axialer Richtung vor dem Gewindeanfang liegt, ist es bei Fig.33 etwa auf gleicher Höhe mit dem Gewindeanfang. Dabei erkennt man, daß demgemäß bei einem relativ langen dicken Bereich 11 der dünnere Bereich 12 entsprechend länger wird. Fig.34 zeigt ein Ausführungsbeispiel, bei welchem das Schlitzende 14 sogar innerhalb des Gewindes angeordnet ist, also die ersten Gewindegänge noch an der Außenseite der Klemmfinger 9 liegen, also etwas mitverformt werden können. Beim Verklemmen hat dies den Vorteil, daß auch die ersten Gewindegänge durch die Überwurfmutter 3 radial nach innen gedrückt bzw. abgestützt werden können.

Die Ausgestaltungen gemäß Fig.35 und 36 mit beidseitigen Einbuchtungen 28 der Klemmfinger 9 in ihrem dünneren Bereich 12 wurde bereits erwähnt. Fig.25 und auch Fig.36 macht dabei deutlich, daß die Einbuchtung 28 praktisch über die gesamte Länge des dünneren Bereiches 12 reichen kann.

Zur Verbesserung der Abdichtbarkeit sind bei einem Klemmeinsatz aus Kunststoff beim Ausführungsbeispiel gemäß Fig.36 die sich durch die Einbuchtungen 28 ergebenden Durchbrüche im Inneren durch eine Spritzhaut 30 ganz oder teilweise geschlossen. Diese sehr dünne Spritzhaut 30 kann beim Verformen der Klemmfinger so eingeschnitten oder eingefaltet werden, daß die durch die radiale Einwärtsverformung bewirkte Durchmesserverminderung im Bereich der Spritzhaut problemlos ausgeglichen wird. Trotz der Einbuchtungen 28 und der daraus resultierenden größeren Weichheit der dünneren Bereiche 12 ergibt sich also auch in diesem Bereich eine gute Abdichtbarkeit.

Fig.37 zeigt unterschiedliche Formen der dickeren und dünneren Bereiche der Klemmfinger 9 jeweils in Relation zu der axialen inneren Abstützung der Dichtung 10.

Bei Fig.37a ist ein etwa zwei Drittel der Gesamtlänge der Klemmfinger 9 ausmachender dickerer Bereich 11 vorgesehen und die Abstützung der Dichtung erfolgt an einer etwa ebenen, in einer radialen Querschnittsebene liegenden Schulter 31.

Bei Fig.37b ist der dünnere Bereich 12 gegenüber dem vorbeschriebenen Ausführungsbeispiel etwas kürzer und die Schulter 31 ist von innen nach außen schräg angeordnet, so daß die Dichtung bei einer axialen Kraftbeaufschlagung im dünneren Bereich 12 etwas nach außen gegen die Innenseite des Fingers 9 hin verschoben und verformt werden kann.

Bei der Ausführungsform nach Fig.37c ist die Schulter 31 etwas konkav gerundet, um der Dichtung 10 und ihrer innenliegenden Stirnseite ein noch besseres Widerlager zu bieten. Dabei erkennt man, daß der dünnere Bereich 12 in diesem Falle in seinem Verlauf eine Querschnittsänderung hat, wobei er von dem Schlitzende 14 aus zu dem dickeren Bereich 11 hin in seinem Querschnitt über eine Schräge allmählich zunimmt. Gleichzeitig ist die konkave Querschnittsform der Schulter 31 etwas in den dünneren Bereich 12 fortgesetzt.

Im Ausführungsbeispiel nach Fig.37d ist die sich ändernde Querschnittsform des dünneren Bereiches 12 noch deutlicher, wobei die äußere Wandung der Ringnut 18 bogenförmig in die Innenkontur des dünneren Bereiches 12 des Klemmfingers 9 übergeht. Dabei erkennt man gleichzeitig, daß in diesem Falle das Schlitzende 14 etwa auf der Höhe des Bodens der Ringnut 18 liegt und schon einen ersten Gewindegang umfaßt.

Bei Fig.37e ist die zur radialen Mitte der Schraubhülse 3 hin liegende Wandung der Ringnut 18 mit einer Hinterschneidung ausgeführt, um eine noch bessere Fixierung der Dichtung 10 selbst unter stärksten Verformungen zu erhalten.

Die Figuren 38 bis 43 zeigen - wie bereits erwähnt - Ausführungsbeispiele, bei denen der Klemmeinsatz 5 ein loses oder separates Teil ist, der aber bezüglich seiner Funktionsweise und Ausgestaltung weitgehend den vorbeschriebenen Ausführungsbeispielen von einstückig angeformten Klemmeinsätzen 5 entspricht.

In Fig.38 und 39 erkennt man deutlich, daß bei diesem Klemmeinsatz 5 ebenfalls Klemmfinger 9 mit einem dickeren Bereich und einem dünneren Bereich 12 vorgesehen sind, wobei dieser Klemmeinsatz 5 an seinem der Überwurfmutter 3 abgewandten Endbereich wiederum in seinem Inneren eine Ringnut 18 zur Abstützung der Dichtung 10 hat. Die Schraubhülse 3 hat dabei ihrerseits in bekannter Weise eine Anlagefläche 32 zur Abstützung dieses Klemmeinsatzes 5.

Bei den Ausführungsbeispielen nach Fig.40 bis Fig. 43 ist die Gegenhülse 3 keine Überwurfmutter mit einem Innengewinde, das mit einem Außengewinde der Schraubhülse 2 zusammenwirkt, sondern die Schraubhülse 2 hat ein Innengewinde und die Gegenhülse 3 hat ein in dieses passendes Außengewinde, ist also als Druckstutzen ausgebildet. Der Klemmeinsatz 5 ist dabei wiederum ein loses Teil und entspricht weitestgehend dem gemäß Fig.38 und 39.

Die zur Verformung der Klemmfinger 9 bei der Verschraubung von Schraubhülse 2 und Gegenhülse 3 wirksame Druckfläche 6 ist dabei an der in Gebrauchsstellung inneren Stirnseite der Gegenhülse 3 angeordnet, so daß sich diesbezüglich dieselbe Funktion wie beim Zusammenwirken des Klemmeinsatzes 5 mit der Überwurfmutter 3 ergibt. Dabei ist angedeutet, daß auch in diesem Falle die sich konisch verjüngende Druckfläche 6 zwei Abschnitte 6a und 6b haben kann (vgl.Fig.41).

Beim Ausführungsbeispiel nach Fig.42 und 43 ist der Klemmeinsatz 5 gegenüber dem vorbeschriebenen Ausführungsbeispiel um 180 Grad gewendet einzusetzen, denn die sich konisch verjüngende Druckfläche 6 zum Verformen der Klemmfinger 9 ist nunmehr an einem Absatz im Inneren der Schraubhülse 2 vorgesehen, während die Gegenhülse 3 eine in einer radialen Ebene liegende Andruckfläche 33 zum Andrücken des Klemmeinsatzes 5 an die Druckfläche 6 hat, die dabei wiederum in Abschnitte 6a und 6b aufgeteilt ist. Die radiale Verformung der Klemmfinger 9 erfolgt in diesem Falle also im Inneren der Schraubhülse 2.

Die Klemmverschraubung 1 mit einer Schraubhülse 2 und einer damit verbindbaren Gegenhülse oder Überwurfmutter 3 hat einen Klemmeinsatz 5, der durch Schlitze 8 oder ähnliche Freiräume gebildete Klemmfinger 9 aufweist, welche bei einer Klemmverschraubung 1 aus Kunststoff vorzugsweise einstückig an die Schraubhülse 2 angeformt sind. Durch das Verschrauben der Schraubhülse 2 mit der Gegenhülse 3 wird über eine ringartige Druckfläche 6 an der Gegenhülse oder Überwurfmutter 3 oder über eine sich verjüngende Form 6 in der Schraubhülse 2 oder in der Gegenhülse oder Überwurfmutter 3 eine radiale Verformung der Klemmfinger 9 gegen einen zu klemmenden Körper hin erreicht. Wenigstens ein Teil der Gesamtanzahl der Klemmfinger 9 hat zumindest zwei in axialer Richtung nebeneinander angeordnete Bereiche unterschiedlicher Dicke, wobei bei der einstückigen Ausführung der Schraubhülse 2 ein dünnerer Bereich 12 sich unmittelbar an die Schraubhülse 2 anschließt, während der im Querschnitt dickere Bereich 11 an dem freien Ende des Klemmeinsatzes 5 beginnend in seiner längsten Erstreckung maximal bis an das Schlitzende 14 heranreicht, wobei der Klemmfinger 9 sich an der radial verdünnten Wandung 12 am Schlitzende 14, jedoch noch mit verminderter Kraft abbiegen läßt. Die radiale Dicke des dickeren Bereiches 11 beträgt dabei wenigstens zwei Drittel oder gar drei Viertel des Maßes, oder das ganze Maß, welches sich zwischen dem Kerndurchmesser des Gewindes der Schraubhülse 2 oder der Gegenhülse bzw. Überwurfmutter 3 und der Durchgangsöffnung 13 für das Kabel 4 durch die Schraubhülse 2 und die Gegenhülse 3, das heißt, dem größten Klrmmdurchmesser, erstreckt. Somit können auch Körper mit kleineren Durchmessern mit der Klemmverschraubung 1 sicher erfaßt und einer hohen Klemmkraft mit großer Zugentlastung ausgesetzt werden.

## Patentansprüche

1. Klemmverschraubung (1) mit einer Schraubhülse (2), einer damit verbindbaren Gegenhülse (3) oder dergleichen Druckstück und mit einem damit gegen ein Kabel (4), Rohr, Schlauch, Stab oder einen ähnlichen zu klemmenden Körper preßbaren Klemmeinsatz (5), wobei die Gegenhülse (3) oder dergleichen Druckstück den Klemmeinsatz (5) mit einer ringartigen Druckfläche (6) zumindest an einer der Stirnseiten (7) beaufschlagt oder übergreift und beim Anziehen des Gewindes mit einer sich verjüngenden Form, zum Beispiel mittels Rundung oder mittels eines Konus oder Stufen, welche am Klemmeinsatz, in der Schraubhülse oder anstelle der ringartigen Druckfläche (6) in der Gegenhülse angeordnet sind, einen mit axialen, an der Stirnseite (7) mündenden Schlitzen (8) oder ähnlichen Freiräumen versehenen, Klemmfinger (9) bildenden Bereich des Klemmeinsatzes (5) radial gegen das Kabel (4), Rohr oder dergleichen hin verformt, wobei zwischen Klemmeinsatz (5) und Kabel (4) oder dergleichen eine Dichtung (10) angeordnet ist, die von den durch die Schlitze (8) oder ähnlichen Freiräumen an dem Klemmeinsatz (5) gebildeten Klemmfingern (9) durch deren radiale Verformung gegen das Kabel (4) anpreßbar ist, wobei wenigstens ein Teil der Gesamtzahl der Klemmfinger (9) zumindest zwei in axialer Richtung nebeneinander angeordnete Bereiche unterschiedlicher radialer Dicke hat und der dickere Bereich (11) mit seiner klemmfläche (15) gegenüber dem dünneren Bereich (12) der Klemmfinger (9) nach innen übersteht und wobei die radiale Dicke des dickeren Bereiches (11) des Klemmfingers (9) wenigstens etwa zwei Drittel des Maßes beträgt, welches sich zwischen dem Kerndurchmesser des Gewindes der Schraubhülse (2) und dem gleichen Gewinde der Gegenhülse bzw. Überwurfmutter (3) und der stirnseitigen Durchgangsöffnung (13) für den zu klemmenden Körper durch die Schraubhülse (2) und die Gegenhülse (3), das heißt dem größten Klemmdurchmesser, erstreckt, **dadurch gekennzeichnet**, daß die radiale Dicke des dickeren Bereiches (11) so gewählt ist, daß zwischen der Klemmfläche (15) des dickeren Bereiches (11) in dessen Ausgangsstellung und dem größten Klemmdurchmesser ein radialer Abstand vorhanden ist, und daß dieser Abstand wenigstens teilweise von der Dichtung (10) ausgefüllt ist.

2. Klemmverschraubung nach Anspruch 1, dadurch gekennzeichnet, daß die radiale Dicke des dickeren Bereiches (11) des Klemmfingers (9) drei Viertel von dem Maß beträgt, welches sich zwischen dem Kerndurchmesser des Gewindes an der Schraubhülse (2) bzw. der Gegenhülse (3) und der Durchgangsöffnung (13) durch die Schraub- und Gegenhülse, das heißt dem größten Klemmdurchmesser, erstreckt.

3. Klemmverschraubung nach Anspruch 1 oder 2, dadurch gekennzeichnet, daß der radial dickere Bereich (11) gegenüber dem radial dünneren Bereich (12) gleichzeitig radial nach innen und nach außen übersteht.

4. Klemmverschraubung nach einem der Ansprüche 1 bis 3, dadurch gekennzeichnet, daß der radial dickere Bereich (11) in axialer Richtung bis nahezu zum Ende der die Klemmfinger (9) begrenzenden Schlitze (8) reicht oder kürzer ist.

5. Klemmvorrichtung nach einem der Ansprüche 1 bis 4, dadurch gekennzeichnet, daß die Länge des dickeren Bereiches etwa zwei Drittel oder weniger, zum Beispiel die Hälfte oder ein Drittel der Gesamtlänge der Klemmfinger (9) beträgt.

6. Klemmverschraubung nach einem der Ansprüche 1 bis 5, dadurch gekennzeichnet, daß die radiale Querschnittsdicke des dünneren Bereiches (12) des Klemmfingers (9) von dem dicken Bereich (11) ausgehend - insbesondere über eine Schräge und/oder Krümmung vorzugsweise an der radial innenliegenden Seite-oder an der radial innen- und außenliegenden Seite gegen das Schlitzende (14) hin etwa über die Hälfte der Länge des dünneren Bereiches (12) abnimmt.

7. Klemmverschraubung nach einem der Ansprüche 1 bis 6, dadurch gekennzeichnet, daß der gerade, rechtwinklige, schräge oder gekrümmt abgesetzte Übergang vom radial dickeren Bereich (11) des Klemmfingers (9) zu dem radial dünneren Bereich (12) von innen nach außen und/oder von außen nach innen verläuft.

8. Klemmverschraubung nach einem der Ansprüche 1 bis 7, dadurch gekennzeichnet, daß die Relation der Länge des dicken Bereiches (11) zur Länge des dünnen Bereiches (12) so gewählt ist, daß der dicke Bereich (11) in der größtmöglichen Klemmstellung oder Verformung mit seiner Außenseite zumindest noch teilweise an der Druckfläche (6) der Gegenhülse oder Überwurfmutter (3) anliegt.

9. Klemmverschraubung nach einem der Ansprüche 1 bis 8, dadurch gekennzeichnet, daß die radial geschwächte Wandung bzw. der dünnere Bereich (12) des Klemmfingers (9) eine derartige Länge hat, daß er in Gebrauchsstellung - auch bei den kleineren Querschnittsabmessungen des zu klemmenden Körpers-in dem Anlagebereich an der sich verjüngenden Druckfläche (6) der Schraub- oder Gegenhülse in den radial dickeren Bereich (11) übergeht oder sich höchstens bis zur Durchgangsöffnung (13) der Schraubhülse (2) bzw. der Gegenhülse (3) erstreckt.

10. Klemmverschraubung nach einem der Ansprüche 1 bis 9, dadurch gekennzeichnet, daß die Länge des dünneren Bereiches (12) gering ist und kleiner oder gleich dem etwa Einfachen bis Dreifachen seiner Wandstärke ist.

11. Klemmverschraubung nach einem der Ansprüche 1 bis 10, dadurch gekennzeichnet, daß die axiale Abstützung (18,31) der Dichtung (10) gegenüber den Schlitzenden (14) und den Enden der Klemmfinger (9) axial zurückversetzt ist.

12. Klemmverschraubung nach einem der Ansprüche 1 bis 11, dadurch gekennzeichnet, daß die axiale Gesamtlänge der Klemmfinger (9) in Klemmstellung etwa dem Überstand der Gegenhülse (3) über die Schraubhülse (2) in gegenseitiger verschraubter Position und Klemmstellung entspricht und die Klemmfinger (9) in Klemmstellung mit einem Teil ihrer radialen Verdickung in die Durchgangsöffnung (13) der Schraubhülse (2) oder der Gegenhülse (3) hineinragen.

13. Klemmverschraubung nach einem der Ansprüche 1 bis 12, dadurch gekennzeichnet, daß die Länge des dünnen Bereiches (12) des Klemmfingers (9) so groß und seine radiale Dicke derart gering sind, daß der Klemmfinger (9) in seiner verformten Endstellung zwischen der Wandung der Durchgangsöffnung (13) und der Außenseite eines einen radialen Abstand zu dem Klemmeinsatz (5) und der Durchgangsöffnung (13) der Schraubhülse (2) bzw. der Gegenhülse (3) aufweisenden kleineren zu klemmenden Körpers vom Ende (14) der Schlitze (8) ausgehend schräg radial nach innen bis zu einem Wendepunkt (16) gebogen ist.

14. Klemmverschraubung nach Anspruch 13, dadurch gekennzeichnet, daß der dünne Bereich (12) des Klemmfingers (9) in Gebrauchsstellung von dem Wendepunkt (16) zu dem den dicken Bereich (11) aufweisenden freien Halteende des Klemmfingers (9) hin eine von der ersten Biegung abweichende zweite Biegung oder Gegenbiegung hat.

15. Klemmverschraubung nach einem der Ansprüche 1 bis 14, dadurch gekennzeichnet, daß der Klemmfinger (9) in seinem dünnen weichen Bereich (12) etwa Z- oder S-förmig verformbar ist.

16. Klemmverschraubung nach einem der Ansprüche 1 bis 15, dadurch gekennzeichnet, daß die axiale Gesamtlänge der Klemmfinger (9) so gewählt ist, daß sie in Klemmstellung an einem kleineren Querschnitt eines zu klemmenden Körpers mit ihrer radial verdickten Klemm- bzw. Druckzone in der Durchgangsöffnung (13) der Schraubhülse (2) bzw. der Gegenhülse (3) angeordnet sind.

17. Klemmverschraubung nach einem der Ansprüche 1 bis 16, dadurch gekennzeichnet, daß sich der radial dünnere Bereich (12) der Klemmfinger (9) in maximaler Klemmstellung nahezu bis an den kleineren Durchmesser der sich verjüngenden Form oder Druckfläche (6) in der Schraubhülse (2) oder in der Gegenhülse (3) oder darüber hinaus erstreckt und der dickere Bereich (11) ganz oder teilweise in die Durchgangsöffnung (13) der Gegenhülse (3) oder der Schraubhülse (2) hineinragt.

18. Klemmverschraubung nach einem der Ansprüche 1 bis 17, dadurch gekennzeichnet, daß die Klemmfinger (9) zumindest in ihrem radial verdickten Bereich (11) durch Schrägschlitze (8), welche von der Umfangsfläche schräg zum Radius nach innen verlaufen, gebildet sind.

19. Klemmverschraubung nach einem der Ansprüche 1 bis 18, dadurch gekennzeichnet, daß die Klemmfinger (9) durch ein- oder beidseitige Einbuchtungen (28) mindestens in ihrem dünneren unteren Bereich (12) in ihrer Umfangserstreckung schmaler als in ihrem oberen bzw. vorderen Bereich sind.

20. Klemmverschraubung nach einem der Ansprüche 1 bis 19, dadurch gekennzeichnet, daß die Klemmfinger (9) an ihrer Klemm- oder Druckfläche (15) und/oder an ihrer Stirnseite (7) abgesetzt, ausgespart und/oder profiliert sind.

21. Klemmverschraubung nach einem der Ansprüche 1 bis 20, dadurch gekennzeichnet, daß wenigstens drei Klemmfinger (9) am Umfang des Klemmeinsatzes (5) verteilt sind.

22. Klemmverschraubung nach einem der Ansprüche 1 bis 21, dadurch gekennzeichnet, daß die Klemmfinger (9) bei vorzugsweise gleicher Gesamtlänge am Umfang des Klemmeinsatzes (5) verteilt verschieden lange dickere Bereiche (11) haben, so daß ein Klemmfinger in Klemmstellung bei kleineren zu klemmenden Querschnitten, zum Beispiel Kabeldurchmessern, schräg und der andere Klemmfinger etwa S-förmig und mit seinem verdickten Bereich (11) in der Durchgangsöffnung (13) ganz oder teilweise anliegend angeordnet sind.

23. Klemmverschraubung nach einem der Ansprüche 1 bis 22, dadurch gekennzeichnet, daß der Klemmeinsatz (5) im Bereich der axialen Abstützung für die Dichtung (10) eine in axialer Richtung vorstehende innere Haltehülse (17) hat, welche mit der Ausgangsstelle der Klemmfinger (9) eine ringförmige, zum axialen Ende der Klemmfinger (9) hin offene Ringnut (18) bildet und den schraubhülsenseitigen Randbereich der Dichtung (10) ganz oder teilweise in sich aufnimmt.

24. Klemmverschraubung nach einem der Ansprüche 1 bis 23, dadurch gekennzeichnet, daß der Klemmeinsatz (5) einstückig an die Schraubhülse (2) angeformt ist.

25. Klemmverschraubung nach Anspruch 23 oder 24, dadurch gekennzeichnet, daß die Schlitze (8) und/oder die seitlichen Einbuchtungen (28) der Klemmfinger (9) in die radial äußere Wandung (19) der Ringnut (18) hineinreichen und sich-gegebenenfalls - bis oder nahezu bis zum Nutengrund erstrecken.

26. Klemmverschraubung nach einem der Ansprüche 23 bis 25, dadurch gekennzeichnet, daß die Zwischenräume im unteren bzw. axial gegenüber der Stirnseite (7) zurückversetzten Endbereich der Klemmfinger (9), welche durch die Schlitze (8) bzw. durch die Einbuchtungen (28) entstehen, durch eine elastische, beim Klemmvorgang stauch- und/oder faltbare oder durch Scherwirkung sich einseitig selbst frei schneidende dünne Spritzhaut (30) nach außen verschlossen sind.

27. Klemmverschraubung nach einem der Ansprüche 23 bis 26, dadurch gekennzeichnet, daß der Boden oder Grund der Ringnut (18) bzw. die Abstützfläche (31) sich in axialer Richtung auf gleicher Höhe mit dem Gewindeanfang des Außengewindes der Schraubhülse (2) befindet.

28. Klemmverschraubung nach einem der Ansprüche 23 bis 26, dadurch gekennzeichnet, daß der Grund der Ringnut (18) bzw. die ringförmige Abstützfläche (31) für die Dichtung (10) in axialer Richtung mit Abstand zum Gewindeanfang angeordnet ist.

29. Klemmverschraubung nach einem der Ansprüche 23 bis 28, dadurch gekennzeichnet, daß sich die radial innenliegende, dem zu klemmenden Körper zugewandte Seite der Klemmfinger (9) in die radial außenliegende Wandung (19) der Ringnut (18) fortsetzt.

30. Klemmverschraubung nach einem der Ansprüche 1 bis 29, dadurch gekennzeichnet, daß in der Durchgangsöffnung (13) der Schraubhülse oder der Gegenhülse (3) eine ringförmig umlaufende Anlagefläche (13a) für die der Klemmstelle abgewandte Seite des dickeren Bereiches (11) der Klemmfinger (9) zur Abstützung des Klemmfingers, insbesondere eine etwa zylindrische und/oder nach außen verjüngende kegelstumpfförmige Fläche vorgesehen ist.

31. Klemmverschraubung nach einem der Ansprüche 1 bis 30, dadurch gekennzeichnet, daß die sich verjüngende Druckfläche (32) der Gegenhülse (3) in Klemmstellung der Klemmfinger (9) an einem Körper mit kleinerem Durchmesser zumindest mit ihrem größten Durchmesserbereich sich nahe am Schlitzende (14) der Klemmfinger (9) befindet, oder auf den der Schraubhülse (2) nahen Bereichen der Klemmfinger (9) aufsitzt.

32. Klemmverschraubung nach einem der Ansprüche 1 bis 31, dadurch gekennzeichnet, daß die sich verjüngende Druckfläche (6) der Gegenhülse (3) oder Überwurfmutter im Längsschnitt gesehen vom größeren Durchmesser ausgehend unter einen kleinen Winkel relativ zum Radius oder Querschnitt etwa geradlinig nach innen verläuft und in ihrem weiteren Verlauf eine Richtungsänderung in dem Sinne aufweist, daß ihr weiterer Verlauf zur Innenseite oder Achse hin gegenüber dem Radius einen größeren Winkel hat.

33. Klemmverschraubung nach Anspruch 32, dadurch gekennzeichnet, daß wenigstens ein Drittel der radialen Erstreckung der sich verjüngenden Druckfläche (6) unter dem kleineren Winkel und der Rest unter dem größeren Winkel verlaufen.

34. Klemmverschraubung nach Anspruch 32 oder 33, dadurch gekennzeichnet, daß wenigstens zwei Drittel der radialen Erstreckung der sich verjüngenden Druckfläche (6) unter dem kleineren Winkel und der Rest unter dem größeren Winkel verlaufen.

35. Klemmverschraubung nach einem der Ansprüche 32 bis 34, dadurch gekennzeichnet, daß die Richtungsänderung von dem spitzeren oder kleineren Winkel zu dem größeren Winkel hin winkelförmig, bogenförmig oder gerundet, vorzugsweise ballig und insbesondere konvex ist.

36. Klemmverschraubung nach einem der Ansprüche 32 bis 35, dadurch gekennzeichnet, daß die sich verjüngende Druckfläche der Gegenhülse zum radialen Verformen der Klemmfinger aus wenigstens zwei konischen Druckflächen (6a, 6b) mit verschieden steilen Winkeln relativ zu einer Durchmesserebene besteht, wobei die innere, in die Durchgangsöffnung (13) der Schraubhülse (2) oder der Gegenhülse (3) mündende Druckfläche (6a) den größeren Winkel aufweist.

37. Klemmverschraubung nach einem der Ansprüche 32 bis 36, dadurch gekennzeichnet, daß die radiale Verdickung bzw. der dickere Bereich (11) der Klemmfinger (9) in maximaler Klemmstellung die sich verjüngende Druckfläche (6) in der Schraubhülse (2) bzw. Gegenhülse (3) im Bereich des größten Winkels sich abstützend beaufschlagt.

38. Klemmverschraubung nach einem der Ansprüche 1 bis 37, dadurch gekennzeichnet, daß die Klemmfinger (9) von der Stirnseite der Schraubhülse (2) ausgehen und ihre ganze Außenseite sich etwa auf der Höhe des Kerndurchmessers des Gewindes der Schraubhülse (2) oder der Gegenhülse (3) befindet oder in dem radial dünneren Bereich (12) radial nach innen versetzt ist.

39. Klemmverschraubung nach einem der Ansprüche 1 bis 38, dadurch gekennzeichnet, daß die in den Klemmeinsatz (5) und dessen Haltehülse (17) eingesetzte Dichtung (10) sich in axialer Richtung zumindest teilweise in die Klemmstellen der verdickten Bereiche (11) der Klemmfinger (9) erstreckt.

40. Klemmverschraubung nach einem der Ansprüche 1 bis 39, dadurch gekennzeichnet, daß die Dichtung (10) ganz durch den Bereich der radial verdickten Klemmfinger (9) hindurchgeführt ist und gegebenenfalls über die Klemmfinger (9) übersteht.

41. Klemmverschraubung nach einem der Ansprüche 32 bis 40, dadurch gekennzeichnet, daß der Dichtungsrand von der sich verjüngenden Druckfläche (6) an die Stirnseite (7) der Klemmfinger (9) andrückbar und festklemmbar ist.

42. Klemmverschraubung nach einem der Ansprüche 1 bis 41, dadurch gekennzeichnet, daß die in dem Klemmeinsatz (5) und dessen Haltehülse (17) eingesetzte Dichtung (10) im radial dünneren Bereich (12) der Klemmfinger (9) zumindest bis unter die Klemmstellen der verdickten Bereiche (11) der Klemmfinger (9) von ihrem Außendurchmesser ausgehend, in radialer Erstreckung einem Abstand zum Innendurchmesser der radial dünneren Bereiche (12) der Klemmfinger (9) aufweist.

43. Klemmverschraubung nach einem der Ansprüche 1 bis 42, dadurch gekennzeichnet, daß die Dichtung (10) einen Absatz hat und ihr im Querschnitt dickerer Bereich innerhalb der dünnen Bereiche (12) der Klemmfinger (9) und ihr im Querschnitt dünner Bereich zumindest teilweise innerhalb der verdickten Bereiche (11) der Klemmfinger (9) angeordnet ist.

44. Klemmverschraubung nach Anspruch 43, dadurch gekennzeichnet, daß die Dichtung (10) mit ihrem Absatz ganz durch den oder gegebenenfalls über den radial dickeren Bereich (11) der Klemmfinger (9) reicht.

45. Klemmverschraubung insbesondere nach einem der Ansprüche 23 bis 44, dadurch gekennzeichnet, daß an der der Haltehülse (17) im Inneren des Klemmeinsatzes (5) abgewandten Stirnseite der Dichtung (10) ein umlaufender Wulst (21) oder dergleichen Verstärkung vorgesehen ist, der die freien Enden der verdickten Bereiche (11) der Klemmfinger (9) oder dort angeordnete Aussparungen (22) stirnseitig übergreift oder in an den Klemmflächen eingesenkte Ausnehmungen (23) eingreift.

46. Klemmverschraubung nach einem der Ansprüche 1 bis 45, dadurch gekennzeichnet, daß die Dichtung (10) zumindest im Klemmbereich (15) der Klemmfinger (9) an ihrem inneren und/oder äußeren Umfang umlaufende und/oder axial verlaufende Aussparungen, Ausnehmungen, Rillen (24), Rinnen, Nuten (25) oder dergleichen Material- oder Wandungsschwächungenaufweist, die beim Verformen der Klemmfinger (9) und dem daraus resultierenden, in Umfangsrichtung wirksamen Stauchen der Dichtung (10) zusammenpreßbar sind.

47. Klemmverschraubung nach einem der Ansprüche 1 bis 46, dadurch gekennzeichnet, daß am Umfang der Dichtung (10) axial oder in Längsrichtung schräg oder schraubenlinienförmig verlaufende Rillen, Rinnen oder Nuten vorzugsweise mit einer etwa trapezförmigen Querschnittsprofilierung, angeordnet sind.

48. Klemmverschraubung nach einem der Ansprüche 1 bis 47, dadurch gekennzeichnet, daß die Dichtung (10) wenigstens einen durch Schlitze oder Nuten in Segmente aufgeteilten ringförmigen Wulst insbesondere an ihrer dem Klemmeinsatz abgewandten äußeren Stirnseite hat.

49. Klemmverschraubung nach einem der Ansprüche 1 bis 48, dadurch gekennzeichnet, daß die Dichtung (10) an ihrem inneren und/oder äußeren Umfang Erhebungen, Stege, Wülste (21) oder dergleichen Verstärkungen aufweist, welche die Dichtung (10) bei starker Einschnürung durch den Klemmeinsatz (5) stabilisieren und daß die Erhebungen oder Wülste (21) an der äußeren Fläche der Dichtung (10) gegebenenfalls in entsprechende Vertiefungen (23) der Klemmfinger (9) eingreifen.

50. Klemmverschraubung nach einem der Ansprüche 1 bis 49, dadurch gekennzeichnet, daß die Klemmfinger (9) an der ihrer Klemmfläche (15) abgewandten Seite eine mit der sich verjüngenden Form der Druckfläche (6) der Gegenhülse (3) in Wirkverbindung befindliche Führungsfläche (30) haben, die bei der Verschraubung und der daraus resultierenden Verformung des Klemmfingers (9) in Anlage mit der sich verjüngenden Druckfläche (6) bleibt, und daß der diese Führungsfläche aufweisende, insbesondere verdickte Klemmbereich (11) der Klemmfinger (9) mit seiner Führungsfläche an der sich verjüngenden Druckfläche (6) unter Verformung des dünnen Klemmfingerbereiches (12) entlanggleitet.

51. Klemmverschraubung nach einem der vorstehenden Ansprüche, dadurch gekennzeichnet, daß an der Stirnseite oder Führungsfläche (30) der Klemmfinger (9) wenigstens eine Abstufung (29) und ein in axialer Richtung wirksamer Anschlag gegenüber der Gegenhülse (3) vorgesehen sind, so daß der stirnseitige Übergang vom Innendurchmesser zum Außendurchmesser an den jeweiligen Klemmfingern (9) wenig-stens einmal abgestuft ist.

52. Klemmverschraubung nach Anspruch 51, dadurch gekennzeichnet, daß wenigstens zwei Abstufungen (29) vorgesehen sind und die jeweils auf dem größten Durchmesser liegende Stirnseite der letzten Abstufung den axialen Anschlag bildet.

53. Klemmverschraubung nach Anspruch 51 oder 52, dadurch gekennzeichnet, daß die Gegenhülse (3) nahe der Durchgangsbohrung (13) ihrerseits wenigstens eine oder mehrere Abstufungen (29) aufweist, deren radiale Abmessung oder Höhe gleich oder kleiner als die der Abstufungen (29) der Klemmfinger (9) ist.

54. Klemmverschraubung nach einem der Ansprüche 51 bis 53, dadurch gekennzeichnet, daß die Übergänge von den Stirnseiten auf die äußeren Axialflächen der Abstufungen (29) an den Klemmfingern (9) und/oder der Gegenhülse (3) abgeschrägt oder abgerundet sind.

55. Klemmverschraubung nach einem der Ansprüche 51 bis 54, dadurch gekennzeichnet, daß die jeweils im Querschnitt etwa axial verlaufenden Flächen der Abstufungen (29) in axialer Richtung von der Stirnseite aus zur nächsten Stufe unter spitzem Winkel konisch ansteigen.

56. Klemmverschraubung nach einem der Ansprüche 1 bis 55, dadurch gekennzeichnet, daß die Klemmfinger (9) in ihrer äußersten Klemmstellung, das heißt bei stärkster Verformung, mit ihrem dickeren Bereich (11) - in die Durchgangsöffnung (13) der Schraubhülse (2) bzw. Gegenhülse (3) hineinragend - derart dicht aneinanderliegen, daß der zwischen ihnen verbleibende Durchlaßquerschnitt zwei Drittel oder weniger, zum Beispiel die Hälfte des kleinsten Kabelquerschnittes entspricht.

## Claims

1. A threaded clamp (1) including a threaded sleeve (2), a counter-sleeve (3) or similar member exerting pressure connectable thereto, and further including a clamping means (5) adapted to be pressed therewith against a cable (4), pipe, hose, rod or similar body to be clamped, wherein the counter-sleeve (3) or similar member exerting pressure is applied to or engages over the clamping means (5) with a ring-like contact surface (6) at least at one of the end faces (7) and, as the thread is fastened, deforms the clamping means (5) by a tapering shape, e.g. by means of curvature or by means of a cone or steps, arranged on the clamping means, in the threaded sleeve or instead of the ring-like contact surface (6) in the counter-sleeve, such deformation of the clamping means (5) being effected in an area thereof which is provided with axial slots (8) opening out at the face (7) or similar clearances and forms clamping fingers (9) and taking place radially towards the cable (4), pipe or the like, wherein arranged between clamping means (5) and cable (4) or the like is a seal (10) adapted to be pressed against the cable (4) by the radial deformation of the clamping fingers (9) formed by the slots (8) or similar clearances on the clamping means (5), wherein at least some of the total number of clamping fingers (9) have at least two axially adjacent zones of different radial thickness and the clamping surface (15) of the thicker zone (11) projects inwardly relative to the thinner zone (12) of the clamping fingers (9), and wherein the radial thickness of the thicker zone (11) of the clamping finger (9) is at least about two thirds of the dimension which extends between the root diameter of the thread of the threaded sleeve (2) and the same thread of the counter-sleeve or retaining nut (3) and the end passage (13) for the body to be clamped through the threaded sleeve (2) and the counter-sleeve (3), that is, the maximum clamping diameter, **characterized in that** the radial thickness of the thicker zone (11) is selected in such a way that there is a radial clearance between the clamping surface (15) of the thicker zone (11) in the initial position thereof and the maximum clamping diameter, and that said clearance is at least partly filled by the seal (10).

2. A threaded clamp as claimed in claim 1, characterized in that the radial thickness of the thicker zone (11) of the clamping finger (9) is three quarters of the dimension that extends between the root diameter of the thread on the threaded sleeve (2)/counter-sleeve (3) and the passage (13) through the threaded sleeve and counter-sleeve, that is, the maximum clamping diameter.

3. A threaded clamp as claimed in claim 1 or claim 2, characterized in that the radially thicker zone (11) projects radially inwardly and outwardly relative to the radially thinner zone (12).

4. A threaded clamp as claimed in any one of claims 1 to 3, characterized in that the radially thicker zone (11) extends in the axial direction to almost the end of the slots (8) defining the clamping fingers (9) or is shorter.

5. A threaded clamp as claimed in any one of claims 1 to 4, characterized in that the length of the thicker zone is about two thirds or less, for example half or one third of the overall length of the clamping fingers (9).

6. A threaded clamp as claimed in any one of claims 1 to 5, characterized in that starting from the thick zone (11), the radial cross-sectional thickness of the thinner zone (12) of the clamping finger (9) decreases - particularly by way of a slope and/or curvature preferably at the radially internal side or at the radially internal side and external side-towards the slot end (14), along approximately one half of the length of the thinner zone (12).

7. A threaded clamp as claimed i any one of claims 1 to 6, characterized in that the straight, right-angled, sloped or curved transition from the radially thicker zone (11) of the clamping finger (9) to the radially thinner zone (12) extends from the inside to the outside and/or from the outside to the inside.

8. A threaded clamp as claimed in any one of claims 1 to 7, characterized in that the relation of the length of the thick zone (11) to the length of the thin zone (12) is selected in such a way that in the maximum clamping position or deformation the external surface of the thick zone (11) lies at least in part against the contact surface (6) of the counter-sleeve or retaining nut (3).

9. A threaded clamp as claimed in any one of claims 1 to 8, characterized in that the radially weakened wall or thinner zone (12) of the clamping finger (9) is of a length such that in the position of use - even when the body to be clamped has smaller cross-sectional dimensions - said thinner zone in the area bearing against the tapering contact surface (6) of the threaded sleeve or counter-sleeve merges into the radially thicker zone (11) or extends maximally as far as the passage (13) of the threaded sleeve (2) or counter-sleeve (3).

10. A threaded clamp as claimed in any one of claims 1 to 9, characterized in that the length of the thinner zone (12) is small and is smaller than or equal to about one to three times its wall thickness.

11. A threaded clamp as claimed in any one of claims 1 to 10, characterized in that the axial support (18, 31) of the seal (10) is set back axially relative to the slot ends (14) and the ends of the clamping fingers (9).

12. A threaded clamp as claimed in any one of claims 1 to 11, characterized in that in the clamping position, the axial overall length of the clamping fingers (9) approximates the excess length of the counter-sleeve (3) over the threaded sleeve (2) in the screwed together position and clamping condition and, in the clamping position, part of the radial thickening of the clamping fingers (9) projects into the passage (13) of the threaded sleeve (2) or counter-sleeve (3).

13. A threaded clamp as claimed in any one of claims 1 to 12, characterized in that the length of the thin zone (12) of the clamping finger (9) is so great and its radial thickness is so small that when the clamping finger (9) has been fully deformed and is situated between the wall of the passage (13) and the outside of a smaller body for clamping that is radially spaced from the clamping means (5) and the passage (13) of the threaded sleeve (2) and counter-sleeve (3), said clamping finger (9) departs from the end (14) of the slots (8) slantwise in a radially inward bend up to a turning point (16).

14. A threaded clamp as claimed in claim 13, characterized in that in the position of use the thin zone (12) of the clamping finger (9) has a second bend or counter bend that differs from the first bend and extends from the turning point (16) towards the free holding end of the clamping finger (9) presenting the thick zone (11).

15. A threaded clamp as claimed in any one of claims 1 to 14, characterized in that the clamping finger (9) is deformable in its thin soft zone (12) in approximately the shape of a letter S or Z.

16. A threaded clamp as claimed in any one of claims 1 to 15, characterized in that the axial overall length of the clamping fingers (9) is selected in such a way that, in the clamping position against a smaller cross section of a body to be clamped, they are arranged with their radially thickened clamping or pressing zone in the passage (13) of the threaded sleeve (2) or counter-sleeve (3).

17. A threaded clamp as claimed in any one of claims 1 to 16, characterized in that in the maximum clamping position, the radially thinner zone (12) of the clamping fingers (9) extends almost to, or beyond, the smaller diameter of the tapering shape or contact surface (6) in the threaded sleeve (2) or in the counter-sleeve (3), and all or part of the thicker zone (11) extends into the passage (13) of the counter-sleeve (3) or threaded sleeve (2).

18. A threaded clamp as claimed in any one of claims 1 to 17, characterized in that the clamping fingers (9), at least in their radially thickened zone (11), are formed by skewed slots (8) that extend inwardly from the circumferential surface and at a slant to the radius.

19. A threaded claim as claimed in any one of claims 1 to 18, characterized in that the clamping fingers (9), at least in their thinner lower zone (12), are circumferentially narrower than in their upper or front area, as a result of niches (28) on one or on both of their sides.

20. A threaded clamp as claimed in any one of claims 1 to 19, characterized in that the clamping surfaces or contact surfaces (15) and/or end faces (7) of the clamping fingers (9) are relieved, recessed and/or profiled.

21. A threaded clamp as claimed in any one of claims 1 to 20, characterized in that at least three clamping fingers (9) are distributed over the circumference of the clamping means (5)

22. A threaded clamp as claimed in any one of claims 1 to 21, characterized in that the clamping fingers (9) of preferably the same overall length have thicker zones (11) differing in length distributed over the circumference of the clamping means (5), so that in the clamping position against smaller cross sections to be clamped, e.g. cable diameters, one clamping finger is arranged slantwise and the other clamping finger is arranged substantially in the shape of a letter S and has all or part of its thickened zone (11) resting in the passage (13).

23. A threaded clamp as claimed in any one of claims 1 to 22, characterized in that region of the axial support for the seal (10), the clamping means (5) has an axially projecting inner collar (17) which with the starting point of the clamping fingers (9) forms an annular groove (18) which is open towards the axial end of the clamping fingers (9) and receives all or part of the seal (10) rim in the direction of the threaded sleeve.

24. A threaded clamp as claimed in any one of claims 1 to 23, characterized in that the clamping means (5) is integrally formed with the threaded sleeve (2).

25. A threaded clamp as claimed in claim 23 or claim 24, characterized in that the slots (8) and/or the lateral niches (28) of the clamping fingers (9) extend into the radially outer wall (19) of the annular groove (18) and - optionally - reach as far as or almost as far as the bottom of the groove.

26. A threaded clamp as claimed in any one of claims 23 to 25, characterized in that the interspaces which are situated in the lower end area of the clamping fingers (9) that is set back axially with respect to the end face (7) and are formed by the slots (8) and by the niches (28) are outwardly closed by an elastic, thin membrane (30) which is compressible and/or foldable during the clamping operation or cuts itself free at one side by shearing action .

27. A threaded clamp as claimed in any one of claims 23 to 26, characterized in that the bottom of the annular groove (18) or the supporting surface (31) is situated in the axial direction on a level with the start of the external thread of the threaded sleeve (2).

28. A threaded clamp as claimed in any one of claims 23 to 26, characterized in that the bottom of the annular groove (18) or the annular supporting surface (31) for the seal (10) is arranged in the axial direction in spaced relationship to the start of the thread.

29. A threaded clamp as claimed in any one of claims 23 to 28, characterized in that the radially internal side of the clamping fingers (9) that faces the body to be clamped merges into the radially external wall (19) of the annular groove (18).

30. A threaded clamp as claimed in any one of claims 1 to 29, characterized in that in the passage (13) of the threaded sleeve or counter-sleeve (3) there is a circumferentially extending, annular surface (13a) for the side of the thicker zone (11) of the clamping fingers (9) facing away from the clamping point to bear against to support the clamping finger, in particular a substantially cylindrical and/or outwardly tapering surface in the shape of a truncated cone.

31. A threaded clamp as claimed in any one of claims 1 to 30, characterized in that in the clamping position of the clamping fingers (9) against a body with a smaller diameter, the largest diametral area of the tapering contact surface (32) of the counter-sleeve (3) is situated near the slot end (14) of the clamping fingers (9), or abuts those regions of the clamping fingers (9) which are near the threaded sleeve (2).

32. A threaded clamp as claimed in any one of claims 1 to 31, characterized in that the tapering contact surface (6) of the counter-sleeve (3) or retaining nut, viewed in longitudinal section, departs from the larger diameter to extend inwardly in a substantially straight line at a small angle relative to the radius or cross section and, in the further course of the contact surface towards the inside or axis, it changes direction by having a larger angle relative to the radius.

33. A threaded clamp as claimed in claim 32, characterized in that at least one third of the radial expanse of the tapering contact surface (6) extends at the smaller angle and the remainder at the larger angle.

34. A threaded clamp as claimed in claim 32 or claim 33, characterized in that at least two thirds of the radial expanse of the tapering contact surface (6) extend at the smaller angle and the remainder at the larger angle.

35. A threaded clamp as claimed in any one of claims 32 to 34, characterized in that the change in direction from the more acute or smaller angle towards the larger angle is angular, arcuate or rounded, preferably spherical and in particular convex.

36. A threaded clamp as claimed in any one of claims 32 to 35, characterized in that the tapering contact surface of the counter-sleeve for radially deforming the clamping fingers consists of at least two conical contact surfaces (6a, 6b) having angles varying in steepness relative to a diametral plane, whereby the inner contact surface (6a) ending in the passage (13) of the threaded sleeve (2) or counter-sleeve (3) has the larger angle.

37. A threaded clamp as claimed in any one of claims 32 to 36, characterized in that in the maximum clamping position, the radial thickening or thicker zone (11) of the clamping fingers (9) is applied to and supported against the tapering contact surface (6) in the threaded sleeve (2) or counter-sleeve (3) in the region of the largest angle.

38. A threaded clamp as claimed in any one of claims 1 to 37, characterized in that the clamping fingers (9) depart from the end face of the threaded sleeve (2) and their entire exterior is substantially flush with the root diameter of the thread of the threaded sleeve (2) or counter-sleeve (3) or is radially inwardly offset in the radially thinner zone (12).

39. A threaded clamp as claimed in any one of claims 1 to 38, characterized in that the seal (10) inserted in the clamping means (5) and collar (17) thereof extends in the axial direction at least partly into the clamping locations of the thickened zones (11) of the clamping fingers (9).

40. A threaded clamp as claimed in any one of claims 1 to 39, characterized in that the seal (10) extends throughout the area of the radially thickened clamping fingers (9) and optionally projects above the clamping fingers (9).

41. A threaded clamp as claimed in any one of claims 32 to 40, characterized in that the seal rim can be pressed by the tapering contact surface (6) against the end faces (7) of the clamping fingers (9) and clamped fast.

42. A threaded clamp as claimed in any one of claims 1 to 41, characterized in that in the radially thinner zone (12) of the clamping fingers (9) and at least to right under the clamping points of the thickened zones (11) of the clamping fingers (9), the seal (10) inserted in the clamping means (5) and collar (17) thereof can have a spacing starting from the outside diameter of said seal and extending radially to the inside diameter of the radially thinner zones (12) of the clamping fingers (9).

43. A threaded clamp as claimed in any one of claims 1 to 42, characterized in that the seal (10) has a shoulder and the seal area thicker in cross section is arranged within the thin zones (12) of the clamping fingers (9) and at least part of the seal area thinner in cross section is arranged within the thickened zones (11) of the clamping fingers (9).

44. A threaded clamp as claimed in claim 43, characterized in that the seal extends with the shoulder thereof throughout or optionally beyond the radially thicker zone (11) of the clamping fingers (9).

45. A threaded clamp, in particular as claimed in any one of claims 23 to 44, characterized in that that end face of the seal (10) which is opposite the collar (17) in the interior of the clamping means (5) is provided with a circumferential rim (21) or similar reinforcement, said rim or the like overlying the free ends of the thickened zones (11) of the clamping fingers (9) or recesses (22) arranged there or engaging with recesses (23) in the clamping faces.

46. A threaded clamp as claimed in any one of claims 1 to 45, characterized in that at least in the clamping area (15) of the clamping fingers (9), there are in the internal and/or external surface of the seal (10) circumferentially extending and/or axially extending recesses, reliefs, grooves (24), channels, flutes (25) or other weakenings of material or of the wall, which can be pressed together during deformation of the clamping fingers (9) and during the resultant compression of the seal (10) taking effect in the circumferential direction.

47. A threaded clamp as claimed in any one of claims 1 to 46, characterized in that arranged on the circumference of the seal (10) are grooves, flutes or channels extending axially or longitudinally slantwise or helically, preferably having a substantially trapezoidal cross-sectional contour.

48. A threaded clamp as claimed in any one of claims 1 to 47, characterized in that seal (10), particularly the outer end face thereof facing away from the clamping means, has at least one annular rim divided into segments by slots or flutes.

49. A threaded clamp as claimed in any one of claims 1 to 48, characterized in that the inner and/or outer circumference of the seal (10) presents prominences, webs, rims (21) or similar reinforced portions which stabilize the seal (10) during strong constriction by the clamping means (5), and that the prominences or rims (21) on the external surface of the seal (10) optionally engage with corresponding recesses (23) of the clamping fingers (9).

50. A threaded clamp as claimed in any one of claims 1 to 49, characterized in that the side of the clamping fingers (9) that faces away from their clamping surface (15) has a guide surface (30) operatively connected to the tapering shape of the contact surface (6) of the counter-sleeve (3), when the fitting is screwed together with the attendant deformation of the clamping finger (9) said guide surface remaining in abutment with the tapering contact surface (6), and that the thickened clamping area (11) of the clamping fingers (9) that presents said guide surface slides therewith along the tapering contact surface (6) while the thin clamping finger zone (12) undergoes deformation.

51. A threaded clamp as claimed in any one of the preceding claims, characterized in that the end face or guide surface (30) of the clamping fingers (9) is provided with at least one step (29) and a stop effective in the axial direction with respect to the counter-sleeve (3), so that the end transition from the inside diameter to the outside diameter on the respective clamping fingers (9) is stepped at least once.

52. A threaded clamp as claimed in claim 51, characterized in that at least two steps (29) are provided and the end face of the last step lying on the largest diameter forms the axial stop.

53. A threaded clamp as claimed in claim 51 or claim 52, characterized in that, in turn, the counter-sleeve (3) has near the passage (13) at least one or several steps (29) whose radial measure or height is equal to or smaller than that of the steps (29) of the clamping fingers (9).

54. A threaded clamp as claimed in any one of claims 51 to 53, characterized in that the transitions from the end faces to the outer axial surfaces of the steps (29) on the clamping fingers (9) and/or counter-sleeve (3) are bevelled or rounded.

55. A threaded clamp as claimed in any one of claims 51 to 54, characterized in that the step (29) surfaces extending substantially axially in cross section ascend conically in the axial direction from the end face to the next step at an acute angle.

56. A threaded clamp as claimed in any one of claims 1 to 55, characterized in that in their extreme clamping position, that is, when most deformed, the clamping fingers (9) with their thicker zone (11) - projecting into the passage (13) of the threaded sleeve (2) or counter-sleeve (3) - are so close together that the section of passage therebetween corresponds to two thirds or less, for example half of the smallest cable cross section.

## Revendications

1. Dispositif de serrage par vissage (1), comprenant un manchon fileté (2), un manchon conjugué (3) ou une pièce de compression similaire qui peut être reliée à lui, et un prolongement de serrage (5) qui peut être serré à l'aide de cette dernière contre un câble (4), un tube, un tuyau, une tige ou un corps à serrer similaire, cependant que le manchon conjugué (3) ou une pièce de compression similaire agit sur le prolongement de serrage (5) ou vient en prise avec lui par-dessus par une surface de compression annulaire (6), du moins sur l'un des côtés frontaux (7), et que, lors du vissage du filetage, il déforme radialement vers le câble (4) ou vers le tube ou similaire une région du prolongement de serrage (5) qui est pourvue de fentes axiales (8) ou d'espaces libres similaires débouchant sur le côté frontal (7) et qui constitue des doigts de serrage (9), et ce, par une forme qui se rétrécit, par exemple au moyen d'un arrondi ou au moyen d'un cône ou de gradins qui sont disposés sur le prolongement de serrage dans le manchon fileté ou dans le manchon conjugué à la place de la surface de compression annulaire (6), cependant qu'est disposé entre le prolongement de serrage (5) et le câble (4) ou similaire un joint d'étanchéité (10) qui peut être serré contre le câble (4) par les doigts de serrage (9) constitués sur le prolongement de serrage (5) par les fentes (8) ou par des espaces libres similaires par la déformation de ceux-ci dans le sens radial, cependant qu'au moins une partie du nombre total des doigts de serrage (9) présente au moins deux zones qui sont disposées l'une à côté de l'autre dans la direction axiale et dont l'épaisseur est différente dans le sens radial, et que la zone la plus épaisse (11) des doigts de serrage (9) fait saillie vers l'intérieur par sa surface de serrage (15) par rapport à leur zone la plus mince (12), et cependant que l'épaisseur dans le sens radial de la zone la plus épaisse (11) du doigt de serrage (9) est au moins égale à deux tiers environ de la longueur qui est comprise entre le diamètre de l'âme du filetage du manchon fileté (2), et donc du même filetage du manchon conjugué ou de l'écrou-chapeau (3), respectivement, et le passage (13) qui est situé du côté frontal, qui est destiné au corps à serrer et qui est ménagé à travers le manchon fileté (2) et le manchon conjugué (3), c'est-à-dire du diamètre de serrage maximal, caractérisé par le fait que l'épaisseur dans le sens radial de la zone la plus épaisse (11) est choisie d'une manière telle qu'un certain intervalle soit présent dans le sens radial entre la surface de serrage (15) de la zone la plus épaisse (11) dans sa position de départ et le diamètre de serrage maximal, et par le fait que cet intervalle est rempli par le joint d'étanchéité (10), du moins partiellement.

2. Dispositif de serrage par vissage selon la revendication 1, caractérisé par le fait que l'épaisseur dans le sens radial de la zone la plus épaisse (11) du doigt de serrage (9) est égale à trois quarts de la distance qui s'étend entre le diamètre de l'âme du filetage ménagé sur le manchon fileté (2) ou sur le manchon conjugué (3), respectivement, et le passage (13) qui traverse le manchon de vissage et le manchon conjugué, c'est-à-dire le plus grand diamètre de serrage.

3. Dispositif de serrage par vissage selon la revendication 1 ou 2, caractérisé par le fait que la zone (11) qui est la plus épaisse dans le sens radial fait saillie en même temps vers l'intérieur et vers l'extérieur dans le sens radial par rapport à la zone (12) qui est la plus mince dans le sens radial.

4. Dispositif de serrage par vissage selon l'une des revendications 1 à 3, caractérisé par le fait que la zone (11) qui est la plus épaisse dans le sens radial arrive dans la direction axiale presque jusqu'à l'extrémité des fentes (8) de délimitation des doigts de serrage (9), ou qu'elle est plus courte.

5. Dispositif de serrage par vissage selon l'une des revendications 1 à 4, caractérisé par le fait que la longueur de la zone qui est la plus épaisse est à peu près égale à deux tiers de la longueur totale des doigts de serrage (9), ou qu'elle est plus courte, en étant égale par exemple à la moitié ou à un tiers de cette longueur.

6. Dispositif de serrage par vissage selon l'une des revendications 1 à 5, caractérisé par le fait que l'épaisseur en section transversale dans le sens radial de la zone (12) du doigt de serrage (9) qui est la plus mince décroît à peu près sur la moitié de la longueur de la zone (12) qui est la plus mince en partant de la zone épaisse (11) et en allant vers l'extrémité (14) de la fente - en particulier par l'intermédiaire d'une rampe et/ou d'une courbure ménagée de préférence sur le côté qui est situé à l'intérieur dans le sens radial - ou sur le côté qui est situé à l'intérieur et à l'extérieur dans le sens radial.

7. Dispositif de serrage par vissage selon l'une des revendications 1 à 6, caractérisé par le fait que la transition rectiligne, à angle droit, oblique ou décrochée en courbe entre la zone (11) du doigt de serrage (9) qui est la plus épaisse dans le sens radial et la zone (12) qui est la plus mince dans le sens radial s'étend de l'intérieur vers l'extérieur et/ou de l'extérieur vers l'intérieur.

8. Dispositif de serrage par vissage selon l'une des revendications 1 à 7, caractérisé par le fait que le rapport entre la longueur de la zone épaisse (11) et la longueur de la zone mince (12) est choisi d'une manière telle que, dans la position de serrage ou de déformation maximale, la zone épaisse (11) porte par son côté extérieur, du moins encore partiellement, sur la surface de compression (6) du manchon conjugué ou de l'écrou-chapeau (3).

9. Dispositif de serrage par vissage selon l'une des revendications 1 à 8, caractérisé par le fait que la paroi du doigt de serrage (9) qui est affaiblie dans le sens radial ou sa zone la plus mince (12), respectivement, présente une longueur telle qu'en position d'utilisation - même dans le cas de très faibles dimensions en section transversale du corps à serrer -, elle se prolonge dans la zone d'appui par la zone (11) qui est la plus épaisse dans le sens radial sur la surface de compression (6) rétrécie du manchon fileté ou du manchon conjugué, ou qu'elle s'étend au plus jusqu'au passage (13) du manchon fileté (2) ou du manchon conjugué (3), respectivement.

10. Dispositif de serrage par vissage selon l'une des revendications 1 à 9, caractérisé par le fait que la longueur de la zone la plus mince (12) est faible, et qu'elle est à peu près inférieure ou égale à une à trois fois l'épaisseur de sa paroi.

11. Dispositif de serrage par vissage selon l'une des revendications 1 à 10, caractérisé par le fait que l'appui axial (18, 31) du joint d'étanchéité (10) est décalé vers l'arrière dans le sens axial par rapport aux extrémités (14) des fentes et aux extrémités des doigts de serrage (9).

12. Dispositif de serrage par vissage selon l'une des revendications 1 à 11, caractérisé par le fait que la longueur axiale totale des doigts de serrage (9) dans la position de serrage correspond à peu près au dépassement du manchon conjugué (3) au-delà du manchon fileté (2) dans leur position de vissage mutuel et dans la position de serrage, et que les doigts de serrage (9) pénètrent dans la position de serrage dans le passage (13) du manchon fileté (2) ou du manchon conjugué (3) par une partie de leur épaississement dans le sens radial.

13. Dispositif de serrage par vissage selon l'une des revendications 1 à 12, caractérisé par le fait que la longueur de la zone mince (12) du doigt de serrage (9) est suffisamment importante et que son épaisseur dans le sens radial est suffisamment faible pour que le doigt de serrage (9), dans sa position finale de déformation, soit recourbé obliquement vers l'intérieur dans le sens radial depuis l'extrémité (14) des fentes (8) jusqu'à un point d'inflexion (16) entre la paroi du passage (13) et le côté extérieur d'un très petit corps à serrer qui présente une certaine distance dans le sens radial par rapport au prolongement de serrage (5) et au passage (13) du manchon fileté (2) ou du manchon conjugué (3), respectivement.

14. Dispositif de serrage par vissage selon la revendication 13, caractérisé par le fait que la zone mince (12) du doigt de serrage (9), dans la position d'utilisation, présente, depuis le point d'inflexion (16) et en allant vers l'extrémité libre de maintien du doigt de serrage (9) qui comporte la zone épaisse (11), une deuxième courbure qui diffère de la première courbure ou une courbure inverse.

15. Dispositif de serrage par vissage selon l'une des revendications 1 à 14, caractérisé par le fait que le doigt de serrage (9) peut être déformé à peu près en forme de Z ou de S dans sa zone mince flexible (12).

16. Dispositif de serrage par vissage selon l'une des revendications 1 à 15, caractérisé par le fait que la longueur axiale totale des doigts de serrage (9) est choisie d'une manière telle que, dans la position de serrage, ils soient disposés dans le passage (13) du manchon fileté (2) ou du manchon conjugué (3), respectivement, par leur zone de compression ou de serrage, respectivement, qui est épaissie dans le sens radial en s'appuyant sur une section transversale plus faible d'un corps à serrer.

17. Dispositif de serrage par vissage selon l'une des revendications 1 à 16, caractérisé par le fait que la zone (12) des doigts de serrage (9) qui est la plus mince dans le sens radial s'étend presque, dans la position de serrage maximal, jusqu'au diamètre le plus faible de la forme ou de la surface de compression (6) qui se rétrécit dans le manchon fileté (2) ou dans le manchon conjugué (3), ou qu'elle s'étend au-delà, et que la zone la plus épaisse (11) pénètre complètement ou partiellement dans le passage (13) du manchon conjugué (3) ou du manchon fileté (2).

18. Dispositif de serrage par vissage selon l'une des revendications 1 à 17, caractérisé par le fait que les doigts de serrage (9) sont formés, du moins dans leur zone (11) qui est épaissie dans le sens radial, par des fentes obliques (8) qui s'étendent vers l'intérieur obliquement par rapport au rayon à partir de la surface du pourtour.

19. Dispositif de serrage par vissage selon l'une des revendications 1 à 18, caractérisé par le fait que, grâce à des renfoncements (28) ménagés d'un côté ou des deux, les doigts de serrage (9) sont plus étroits dans leur étendue périphérique que dans leur zone supérieure ou antérieure, respectivement, du moins dans leur zone inférieure la plus mince (12).

20. Dispositif de serrage par vissage selon l'une des revendications 1 à 19, caractérisé par le fait que les doigts de serrage (9) sont étagés, évidés et/ou profilés sur leur surface de compression ou de serrage (15) et/ou sur leur côté frontal (7).

21. Dispositif de serrage par vissage selon l'une des revendications 1 à 20, caractérisé par le fait qu'au moins trois doigts de serrage (9) sont répartis sur le pourtour du prolongement de serrage (5).

22. Dispositif de serrage par vissage selon l'une des revendications 1 à 21, caractérisé par le fait que les doigts de serrage (9) présentent, pour une longueur totale qui est de préférence la même, des zones plus épaisses (11) de longueurs différentes, celles-ci étant réparties sur le pourtour du prolongement de serrage (5), de sorte que, dans la position de serrage, un doigt de serrage est disposé obliquement pour des sections transversales, et par exemple pour des diamètres de câbles, qu'il s'agit de serrer et qui sont très faibles, et que l'autre doigt de serrage est disposé à peu près en forme de S en portant complètement ou partiellement dans le passage (13) par sa zone épaissie (11).

23. Dispositif de serrage par vissage selon l'une des revendications 1 à 22, caractérisé par le fait que le prolongement de serrage (5) présente, dans la région de l'appui axial du joint d'étanchéité (10), une douille de retenue intérieure (17) qui fait saillie dans la direction axiale, qui forme avec le départ des doigts de serrage (9) une rainure annulaire (18) ouverte dans la direction de l'extrémité axiale des doigts de serrage (9) et qui reçoit complètement ou partiellement la région du bord du joint d'étanchéité (10) qui est située du côté du manchon fileté.

24. Dispositif de serrage par vissage selon l'une des revendications 1 à 23, caractérisé par le fait que le prolongement de serrage (5) est formé d'un seul tenant sur le manchon fileté (2).

25. Dispositif de serrage par vissage selon la revendication 23 ou 24, caractérisé par le fait que les fentes (8) et/ou les renfoncements latéraux (28) des doigts de serrage (9) pénètrent dans la paroi (19) de la rainure annulaire (18) qui est à l'extérieur dans le sens radial, en s'étendant - le cas échéant - jusqu'au fond de la rainure ou presque jusqu'à celui-ci.

26. Dispositif de serrage par vissage selon l'une des revendications 23 à 25, caractérisé par le fait que les espaces intermédiaires qui sont ménagés dans la zone d'extrémité inférieure des doigts de serrage (9) ou dans leur zone d'extrémité décalée vers l'arrière dans le sens axial par rapport au côté frontal (7), respectivement, et qui sont produits par les fentes (8) ou par les renfoncements (28), respectivement, sont fermés vers l'extérieur par une pellicule mince et élastique (30) produite par injection, cependant que celle-ci, lors de l'opération de serrage, peut être refoulée et/ou pliée, ou qu'elle se libère d'elle-même par découpage d'un côté par un effet de cisaillement.

27. Dispositif de serrage par vissage selon l'une des revendications 23 à 26, caractérisé par le fait que le fond ou la base de la rainure annulaire (18) ou la surface d'appui (31), respectivement, se trouve au même niveau dans la direction axiale que le début du filetage extérieur du manchon fileté (2).

28. Dispositif de serrage par vissage selon l'une des revendications 23 à 26, caractérisé par le fait que le fond de la rainure annulaire (18) ou la surface d'appui annulaire (31) qui est destinée au joint d'étanchéité (10), respectivement, est disposée à une certaine distance du début du filetage dans la direction axiale.

29. Dispositif de serrage par vissage selon l'une des revendications 23 à 28, caractérisé par le fait que le côté des doigts de serrage (9) qui est situé à l'intérieur dans le sens radial et qui est tourné vers le corps à serrer se prolonge par la paroi (19) de la rainure annulaire (18) qui est située à l'extérieur dans le sens radial.

30. Dispositif de serrage par vissage selon l'une des revendications 1 à 29, caractérisé par le fait que, pour l'appui du doigt de serrage, il est prévu dans le passage (13) du manchon fileté ou du manchon conjugué (3) une surface d'appui continue annulaire (13a) destinée au côté de la zone la plus épaisse (11) des doigts de serrage (9) qui est opposé à l'endroit du serrage, et en particulier une surface à peu près cylindrique et/ou en forme de tronc de cône se rétrécissant vers l'extérieur.

31. Dispositif de serrage par vissage selon l'une des revendications 1 à 30, caractérisé par le fait que, dans la position de serrage des doigts de serrage (9) sur un corps de très faible diamètre, la surface de compression (32) du manchon conjugué (3) qui se rétrécit se trouve au voisinage de l'extrémité (14) des fentes des doigts de serrage (9), du moins par sa région où le diamètre est le plus important, ou qu'elle s'appuie sur les zones des doigts de serrage (9) qui sont proches du manchon fileté (2).

32. Dispositif de serrage par vissage selon l'une des revendications 1 à 31, caractérisé par le fait que, vue en coupe longitudinale, la surface de compression (6) du manchon conjugué (3) ou de l'écrou-chapeau qui se rétrécit s'étend à peu près en ligne droite vers l'intérieur en partant du plus grand diamètre, et ce, sous un angle faible par rapport au rayon ou à la section transversale, et qu'elle présente dans la suite de son parcours une modification de direction dans ce sens que la suite de son parcours vers le côté intérieur ou vers l'axe présente un angle plus important par rapport au rayon.

33. Dispositif de serrage par vissage selon la revendication 32, caractérisé par le fait qu'au moins un tiers de l'étendue dans le sens radial de la surface de compression (6) qui se rétrécit s'étend sous l'angle le plus faible, et que le reste s'étend sous l'angle le plus important.

34. Dispositif de serrage par vissage selon la revendication 32 ou 33, caractérisé par le fait qu'au moins les deux tiers de l'étendue dans le sens radial de la surface de compression (6) qui se rétrécit s'étendent sous l'angle le plus faible, et que le reste s'étend sous l'angle le plus important.

35. Dispositif de serrage par vissage selon l'une des revendications 32 à 34, caractérisé par le fait que la modification de direction de l'angle le plus aigu ou le plus faible vers l'angle le plus important est en forme d'angle, en forme d'arc ou arrondie, en étant de préférence sphérique et en particulier convexe.

36. Dispositif de serrage par vissage selon l'une des revendications 32 à 35, caractérisé par le fait que la surface de compression du manchon conjugué qui se rétrécit et qui est destinée à déformer les doigts de serrage dans le sens radial est constituée par au moins deux surfaces de compression coniques (6a, 6b) dont la conicité par rapport à un plan diamétral présente des angles différents, cependant que la surface de compression intérieure (6a) qui débouche dans le passage (13) du manchon fileté (2) ou du manchon conjugué (3) présente l'angle le plus important.

37. Dispositif de serrage par vissage selon l'une des revendications 32 à 36, caractérisé par le fait que, dans la position de serrage maximal, l'épaississement des doigts de serrage (9) dans le sens radial ou leur zone la plus épaisse (11), respectivement, agit en s'appuyant dans la zone dont l'angle est le plus important sur la surface de compression (6) qui se rétrécit et qui est ménagée dans le manchon fileté (2) ou dans le manchon conjugué (3), respectivement.

38. Dispositif de serrage par vissage selon l'une des revendications 1 à 37, caractérisé par le fait que les doigts de serrage (9) partent du côté frontal du manchon fileté (2), et que la totalité de leur côté extérieur se trouve à peu près au niveau du diamètre de l'âme du filetage du manchon fileté (2) ou du manchon conjugué (3), ou qu'elle est décalée vers l'intérieur dans le sens radial dans la zone (12) qui est la plus mince dans le sens radial.

39. Dispositif de serrage par vissage selon l'une des revendications 1 à 38, caractérisé par le fait que le joint d'étanchéité (10) qui est introduit dans le prolongement de serrage (5) et dans la douille de retenue (17) de celui-ci s'étend dans la direction axiale dans les endroits de serrage des zones épaissies (11) des doigts de serrage (9), du moins partiellement.

40. Dispositif de serrage par vissage selon l'une des revendications 1 à 39, caractérisé par le fait que le joint d'étanchéité (10) traverse complètement la zone des doigts de serrage (9) qui sont épaissis dans le sens radial, et qu'il fait éventuellement saillie au-delà des doigts de serrage (9).

41. Dispositif de serrage par vissage selon l'une des revendications 32 à 40, caractérisé par le fait que le bord du joint d'étanchéité peut être comprimé et serré sur le côté frontal (7) des doigts de serrage (9) par la surface de compression (6) qui se rétrécit.

42. Dispositif de serrage par vissage selon l'une des revendications 1 à 41, caractérisé par le fait que le joint d'étanchéité (10) qui est introduit dans le prolongement de serrage (5) et dans la douille de retenue (17) de celui-ci présente dans son étendue dans le sens radial, dans la zone (12) des doigts de serrage (9) qui est la plus mince dans le sens radial et du moins jusqu'au-dessous des endroits de serrage des zones épaissies (11) des doigts de serrage (9), en partant de son diamètre extérieur, une certaine distance par rapport au diamètre intérieur des zones (12) des doigts de serrage (9) qui sont les plus minces dans le sens radial.

43. Dispositif de serrage par vissage selon l'une des revendications 1 à 42, caractérisé par le fait que le joint d'étanchéité (10) présente un étagement, que sa zone la plus épaisse en section transversale est disposée à l'intérieur des zones minces (12) des doigts de serrage (9), et que sa zone mince en section transversale est disposée au moins partiellement à l'intérieur de la zone épaissie (11) des doigts de serrage (9).

44. Dispositif de serrage par vissage selon la revendication 43, caractérisé par le fait que le joint d'étanchéité (10) traverse totalement par son étagement la zone (11) des doigts de serrage (9) qui est la plus épaisse dans le sens radial, ou qu'il arrive éventuellement au-delà de celle-ci.

45. Dispositif de serrage par vissage selon l'une des revendications 23 à 44, caractérisé par le fait qu'il est prévu, sur le côté frontal du joint d'étanchéité (10) qui est opposé à la douille de retenue (17) à l'intérieur du prolongement de serrage (5), un bourrelet annulaire (21) ou un renforcement similaire qui recouvre frontalement les extrémités libres des zones épaissies (11) des doigts de serrage (9) ou des renfoncements (22) ménagés à cet endroit, ou qui pénètre dans des évidements (23) ménagés sur les surfaces de serrage.

46. Dispositif de serrage par vissage selon l'une des revendications 1 à 45, caractérisé par le fait que le joint d'étanchéité (10) présente, du moins dans la zone de serrage (15) des doigts de serrage (9) et sur son pourtour intérieur et/ou extérieur, des renfoncements, des évidements, des nervures (24), des rainures, des cannelures (25) ou des affaiblissements similaires de la matière ou de la paroi qui s'étendent annulairement et/ou axialement et qui peuvent être comprimés lors de la déformation des doigts de serrage (9) et du refoulement du joint d'étanchéité (10) qui en résulte et qui agit dans la direction du pourtour.

47. Dispositif de serrage par vissage selon l'une des revendications 1 à 46, caractérisé par le fait que sont disposées sur le pourtour du joint d'étanchéité (10) des nervures, des rainures ou des cannelures qui s'étendent axialement ou dans la direction longitudinale en étant obliques ou en forme d'hélices et dont le profil en section transversale est de préférence à peu près trapézoïdal.

48. Dispositif de serrage par vissage selon l'une des revendications 1 à 47, caractérisé par le fait que le joint d'étanchéité (10) présente, en particulier sur son côté frontal extérieur opposé au prolongement de serrage, au moins un bourrelet annulaire qui est divisé en segments par des fentes ou par des rainures.

49. Dispositif de serrage par vissage selon l'une des revendications 1 à 48, caractérisé par le fait que le joint d'étanchéité (10) présente sur son pourtour intérieur et/ou extérieur des surélévations, des ailettes, des bourrelets (21) ou des renforcements similaires qui stabilisent le joint d'étanchéité (10) dans le cas d'une forte constriction par le prolongement de serrage (5), et par le fait que les surélévations ou les bourrelets (21) pénètrent éventuellement dans des renfoncements correspondants (23) des doigts de serrage (9) sur la surface extérieure du joint d'étanchéité (10).

50. Dispositif de serrage par vissage selon l'une des revendications 1 à 49, caractérisé par le fait que les doigts de serrage (9) présentent, sur leur côté opposé à leur surface de serrage (15), une surface de guidage (30) qui se trouve en liaison fonctionnelle avec la surface de compression (6) à forme rétrécie du manchon conjugué (3) et qui reste en appui sur la surface de compression rétrécie (6) lors du vissage et de la déformation concomitante du doigt de serrage (9), et par le fait que la zone de serrage (11) des doigts de serrage (9) qui présente cette surface de guidage et qui est en particulier épaissie glisse par sa surface de guidage le long de la surface de compression rétrécie (6) avec une déformation de la zone mince (12) des doigts de serrage.

51. Dispositif de serrage par vissage selon l'une des revendications précédentes, caractérisé par le fait qu'il est prévu, sur le côté frontal ou sur la surface de guidage (30) des doigts de serrage (9), au moins un gradin (29) et une butée agissant dans la direction axiale à l'encontre du manchon conjugué (3), de sorte que la transition frontale entre le diamètre intérieur et le diamètre extérieur est étagée au moins une fois sur les doigts de serrage correspondants (9).

52. Dispositif de serrage par vissage selon la revendication 51, caractérisé par le fait qu'il est prévu au moins deux gradins (29), et que le côté frontal du dernier gradin qui est situé à chaque fois sur le plus grand diamètre constitue la butée axiale.

53. Dispositif de serrage par vissage selon la revendication 51 ou 52, caractérisé par le fait que le manchon conjugué (3) présente pour sa part, au voisinage du passage (13), au moins un ou plusieurs gradins (29) dont la dimension dans le sens radial ou la hauteur est égale ou inférieure à celle des gradins (29) des doigts de serrage (9).

54. Dispositif de serrage par vissage selon l'une des revendications 51 à 53, caractérisé par le fait que les transitions entre les côtés frontaux et les surfaces axiales extérieures des gradins (29) sont obliques ou arrondies sur les doigts de serrage (9) et/ou sur le manchon conjugué (3).

55. Dispositif de serrage par vissage selon l'une des revendications 51 à 54, caractérisé par le fait que les surfaces des gradins (29) qui s'étendent à chaque fois à peu près axialement en section transversale s'élèvent en cône sous un angle aigu dans la direction axiale depuis le côté frontal jusqu'au gradin suivant.

56. Dispositif de serrage par vissage selon l'une des revendications 1 à 55, caractérisé par le fait que, dans leur position de serrage extrême, c'est-à-dire pour la plus forte déformation, les doigts de serrage (9) portent étroitement les uns sur les autres par leur zone la plus épaisse (11) - en pénétrant dans le passage (13) du manchon fileté (2) ou du manchon conjugué (3), respectivement -, d'une manière telle que la section transversale de passage qui reste libre entre eux corresponde à deux tiers ou moins de la plus faible section transversale du câble, et par exemple à la moitié de celle-ci.
